# EUROPEAN PATENT APPLICATION

(11) **EP 4 261 437 A1**
(43) Date of publication of application: **18.10.2023**
(21) Application number: 20965098.5
(22) Date of filing: 10.12.2020
(51) Int. Cl.: F16H 55/06

(54) **GEAR AND MANUFACTURING METHOD THEREFOR**

(71) Applicant: Public Interest Incorporated Association Research Institute For Applied Sciences, Kyoto-shi, Kyoto 606-8202 (JP); Neturen Co., Ltd., Tokyo 141-8639 (JP)
(72) Inventor: KUBO Aizoh, Kyoto-shi Kyoto 606-8202 (JP); MATSUOKA Hiroaki, Kyoto-shi Kyoto 606-8202 (JP)
(74) Representative: Isarpatent
(86) International application number: PCT/JP2020/045984
(87) International publication number: WO 2022/123715

(57) **Abstract**

In order to prevent a spalling failure of a tooth flank (10Y) at a middle point of a tooth height and a dedendum (10Z) caused by Trochoidal interference due to meshing during operation of a gear transmission, in a gear manufacturing process, a manufacturing method is adopted in which a tooth tip edge part is softened more than the tooth flank at the middle point of the tooth height and the dedendum by performing a tempering or annealing treatment on the tooth tip edge part (10X), more preferably by a local tempering or annealing treatment. As a result, it is possible to dramatically improve ease of manufacturing control, quality control, and safety control of a gear while preventing breakage of the gear.

## Description

### Technical Field

The present invention relates to a gear and a method of manufacturing the gear capable of dramatically avoiding a failure due to meshing between gears, improving quality and safety of the gear, and facilitating manufacturing management.

### Background Art

In recent years, a gear transmission has been operated under a high load, and a spalling failure of a tooth flank of a gear has frequently occurred accordingly. Such a failure is a serious problem that further operation of the gear becomes impossible and may lead to a serious accident.

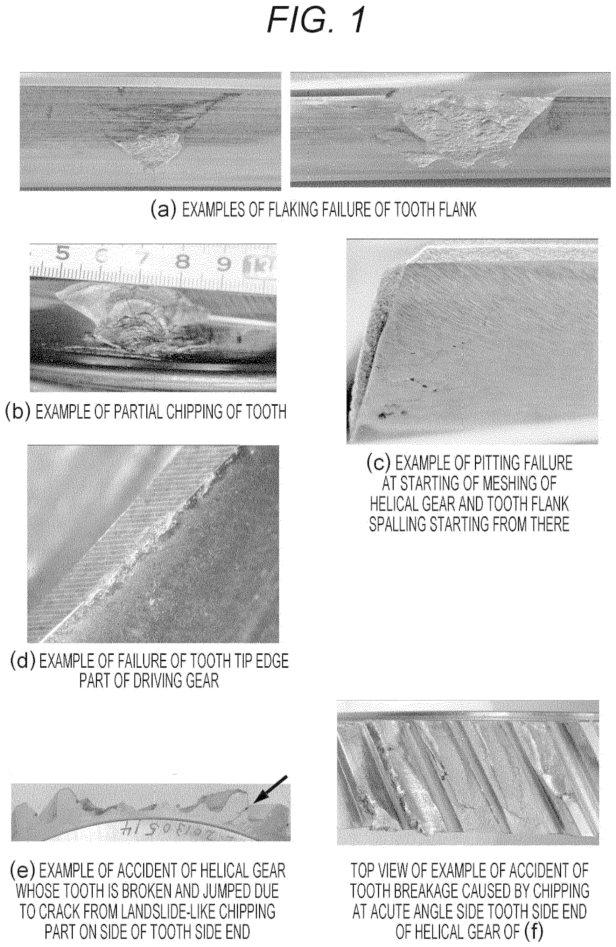

Specifically, in a normal gear operated with a large load, a dedendum of a driving gear is cut by a tooth tip edge part of a mating gear (driven gear). At this time, a large amount of wear debris are generated, and these wear debris are caught by the tooth flank to damage the tooth flank. Furthermore, the wear debris caught in a groove of the dedendum generated by the cutting of the tooth tip collides with the groove of the dedendum, and a microcrack that triggers spalling of the tooth flank occurs. On the other hand, the tooth tip edge part of the driving gear strongly rubs the dedendum of the mating gear at the time of disengagement, and the frictional heat generated at that time softens a dedendum material of the driven gear, thereby causing tooth breakage. Furthermore, chipping of the tooth tip edge part of the driving gear occurs due to large contact stress and high heat generated at that time. Since the wear debris, the spalling debris, and the chipping debris are small, the wear debris, the spalling debris, and the chipping debris are quickly cooled and become hard foreign matters. Then, these foreign matters and the fine foreign matter in lubricating oil are caught in a tooth flank of the meshing gear and a mechanical component such as a bearing of the gear transmission. As a result, deterioration and failure of the entire device are accelerated, and finally, an accident occurs (See Non Patent Literature 1). Fig. 1 illustrates an example of a failure caused to a gear by a photograph. Fig. 1(a) illustrates two examples of a flaking failure of a tooth flank on the left and right, and Fig. 1(b) illustrates an example of partial chipping of a tooth. Fig. 1(c) illustrates an example of a pitting failure of a start point of meshing of a helical gear and tooth flank spalling starting from there, and Fig. 1(d) illustrates an example of a chipping failure of a tooth tip edge part of a driving gear. Fig. 1(e) illustrates an example of an accident of a helical gear whose tooth is broken and jumped due to a crack from a landslide-like chipping part at a tooth side end of the gear, and Fig. 1(f) illustrates an example of an accident in which a tooth breakage caused by chipping at an acute angle side tooth side end of the helical gear in Fig. 1(e) is seen from above. As indicated by an arrow in Fig. 1(e), a crack may travel from a chipping part to the inside of the tooth, and the tooth may be chipped and splashed from the part. In a state where a fracture surface of the tooth of the broken gear is observed from above, as in Fig. 1(f), it generally appears that it is not clear as to what is different between a photograph in which the tooth is regarded as a cantilever and the tooth is broken at a position where the bending stress becomes excessive and a photograph in which the tooth is broken as a target of the calculation formula for bending strength of the tooth defined in various standards or the like, and a situation in which the fracture surface is impressively found in a wide range is frankly understood in a textbook manner, the true cause of this tooth breakage accident cannot be found.

Such problems have been heretofore recognized in the technical field, and Non Patent Literature 1 describes, as "matters necessary for enhancing the competitiveness of gear transmissions and problems to be solved", that in order for our country's gear transmissions to maintain strong international competitiveness in the future, it is necessary to make technological innovations related to the gear transmissions over the entire of 1) improvement in durability and reliability, 2) improvement in vibration and noise performance during operation, 3) improvement in power transmission efficiency, 4) prevention of troubles, and 5) cost reduction. The basis for improving overall design and manufacturing techniques to build overwhelming competitiveness is said to be "design and manufacturing techniques for achieving higher strength than gears designed by conventional methods". That is, although the purpose of the measures against the spalling failure of the gear as described above is to "prevent the failure that cannot be handled by the conventional design method", under the current situation where the failure phenomenon has not been sufficiently clarified, it is a trend in the present technical field that higher load carrying capacity of the gear is aimed and intensively studied and developed as a practical measure in a case where an accurate failure prevention measure has not been constructed.

For example, in Patent Literature 1, in order to achieve both higher durability of a tooth flank and toughness of a tooth root in a gear, a gear having higher durability is provided in which a tooth flank is made higher in hardness than a tooth root by, for example, making a difference in a dispersion precipitation rate, a nitrogen concentration distribution, and an austenite volume distribution of carbide between the tooth flank and the tooth root by a treatment such as cooling or heating after carburizing treatment, or making a carbide to be dispersed and precipitated a sphere or quasi-sphere form, and the gear having both pitting resistance and wear resistance of the tooth flank, and bending fatigue strength and impact resistance of the tooth root. It can be said that the technology described in the same Literature is an example of an effort to aim higher load carrying capacity of the gear as described above.

Although the directionality of research and development for strengthening a gear itself to give more durability is one of measures for preventing a failure of the gear and improving the performance, it cannot be said that the directionality itself leads to the fundamental solution of a phenomenon in which tooth flank failure and tooth partial chipping as a result of development thereof occur due to strong contact between tooth tip edge parts of both the driving gear and the driven gear. As a measure to avoid such a failure, a method of smoothly rounding an edge of the tooth can be considered. However, since the manner of spatial existence of the edges of all teeth of the gear is not simple, processing for smooth rounding is not easy, and the technique can be applied only to special applications in which absolute performance of the gear needs to be pursued more than the cost required for processing, such as for aircraft and for competitive automobile driving, and it cannot be said that the technique can be used even for general gears required to be manufactured at low cost.

The present inventor has conducted detailed research on the mechanism of occurrence of failure spalling in the gear, which is described in Non Patent Literature 1 as "failure phenomenon is not sufficiently clarified at present", as follows, and has made an invention and filed a patent application for a gear and a method of manufacturing the gear capable of significantly reducing a failure during operation with little increase in manufacturing cost by an approach that has not been studied in the present technical field so far (Patent Literature 4).

### Citation List

### Patent Literature

Patent Literature 1: JP-A-2000-18369
Patent Literature 2: JP-A-2015-187479
Patent Literature 3: JP-A-2008-87124
Patent Literature 4: JP-A-2019-120332

### Non Patent Literature

Non Patent Literature 1: Kazuteru Nagamura, "Chapter 2. Research and study on technology for strengthening gear to give more durability Introduction, 2.3 Strengthening gear to give more durability by improvement of tooth flank property", Yutaka Hayashida, Chapter 4, Research and study on evaluation of operating performance of gear transmission and advancement of improvement technology "4.2.3 Design technology of micro form-correction of tooth flank b. Improvement example of 3D figure of tooth flank form correction", Research Report of Sectional Meeting on Advancement of Technology in Design, Manufacture, and Evaluation of Gear Transmissions, RC 261, Innovation Center Research Cooperation Business Committee, Japan Society of Mechanical Engineers, Japan, Published on April 20, 2015, p.11, p.21-27, p.123-127

### Summary of Invention

### Technical Problem

In the research accompanying Patent Literature 4, the present inventor has pursued the mechanism of spalling failure of a gear, and has found that a gear failure occurs because a hard tooth tip edge part attacks a dedendum of a mating gear that is softer than the hard tooth tip edge part. As a result, in a gear constituting a gear transmission, the invention according to Patent Literature 4 has been completed with respect to a gear and a method of manufacturing the gear in which a hardness of the tooth tip edge part in a state of being softened by tempering is softer than a hardness of the dedendum of the mating gear.

Here, as a part common to the present invention, the gear spalling failure mechanism mentioned in Patent Literature 4 and the theory of the invention in Patent Literature 4 will be outlined by taking an involute spur gear as an example. First, Fig. 2 illustrates a common tangential line (referred to as a line of action) of a base circle of a driving/driven gear in which the contact of a tooth form of the involute curve occurs. In a mechanical gear geometrical theory (theory of gear meshing of a tooth), it is taught that there is a pair of teeth already in contact at a position in the middle of a line segment AB in the drawing, and the contact point moves upward (in a direction of A) on this line due to the rotational movement of the gear, and as a result, the next tooth flank comes to a point B, where a new tooth enters the meshing state. However, when the pair of already meshed teeth on the upper side in the drawing has a large deflection due to the load, the driven gear naturally has a rotational delay with respect to the driving gear by the deflection. As a result, the tooth that newly enters the meshing starts to contact at a point C before the point B that is a meshing start point taught by the meshing theory of the gear. This phenomenon is caused by a phase difference with respect to a theoretical normal position of an actual involute tooth form in a cross section perpendicular to a gear axis, and also occurs in a case where crowning form correction of tooth lead, a one side heavy load distribution, a pitch error, and the like exist in the tooth.

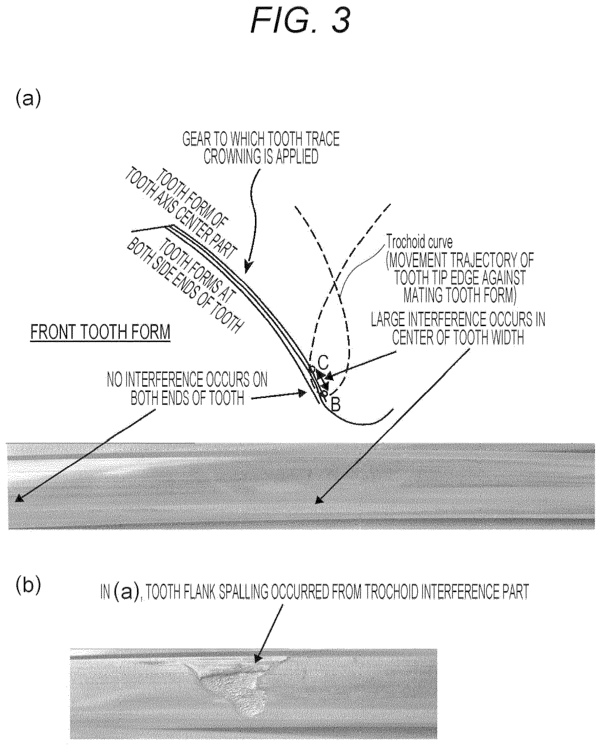

In a state immediately before contact between the teeth that newly enter meshing at the point C starts, the already meshed teeth receive the full load, and thus are bent by that amount, and a rotation delay of the driven gear with respect to the driving gear occurs. Since the tooth of the driven gear newly meshed at the point C is in a state where the edge of the tooth tip is in contact with the tooth, the force shared by the contact portion is extremely smaller than the force borne by the tooth already meshed. During a period from the point C to the point B, that is, in a state (Trochoidal interference) in which the corner of the tooth tip strongly contacts the mating tooth root due to the rotation delay of the driven gear with respect to the driving gear, the reaction force received by the tooth causing the interference is sufficiently smaller than the force received by the pair of teeth with which the tooth flanks are already meshed, and the duration of the state or the advance of the gear rotation angle is slight. Therefore, the movement of the contact point from the point C to the point B during the Trochoidal interference proceeds in a substantially forced displacement state in which a rotation delay amount of the driven gear with respect to the driving gear hardly changes. Such a state is illustrated in the upper part of Fig. 3(a) as a schematic diagram of a state of attack of the dedendum by the tooth tip edge part of the mating gear.

As illustrated in the drawing, as the rotation of the gear progresses, the mating tooth tip approaches the dedendum by drawing a Trochoidal curve. Here, for the sake of convenience, a state in which the gears start to mesh with each other will be described in a limited manner. However, a state similar to that in the upper part of Fig. 3(a) also occurs at the end of the meshing, a moving direction of the contact point is reversed with respect to the state at the start of the meshing, and the state at the end of the meshing can be described in a similar manner to the state at the start of the meshing by replacing the term "start of meshing" in the following description with "end of meshing". When the Trochoidal curve bites into the dedendum, the tooth tip edge part strongly comes into contact with the dedendum in a Trochoidal interference state. Even if a slight misalignment occurs, the tooth of the gear is subjected to processing to give micro tooth form correction called crowning (crowning form correction of tooth lead) so that the tooth form curve is positioned slightly forward at the center of the tooth width and is positioned backward at both side ends of the tooth in order to properly apply the tooth flank over the whole tooth width. In the upper part of Fig. 3(a), the tooth form of the driving gear is indicated by three lines, and the center line connected to the adjacent tooth on the right side in the drawing indicates the front tooth form as a reference, the outer line indicates the tooth form of the tooth width center part, and the inner line indicates the tooth forms at both side ends of the tooth. In this case, Trochoidal interference increases at the center of the tooth width. The photograph illustrated in the lower part of Fig. 3(a) illustrates a state in which the dedendum at the central part of the tooth width is strongly attacked by the tooth tip edge part of the mating gear in that state. As described above, in the gear to which the crowning form correction of tooth lead is applied, as a result of occurrence of large Trochoidal interference in the central portion of the tooth width, it is recognized that the dedendum is attacked by the meshing mating tooth tip corresponding to the shape of the crowning form correction of tooth lead, and the dedendum starts to be strongly damaged. On the other hand, it can be seen that no Trochoidal interference has occurred at both ends of the tooth. Such a situation always occurs as the meshing of the gear teeth progresses. In the photograph of Fig. 3(b), a state in which the spalling of the tooth flank occurs from the Trochoidal interference part is illustrated. Comparing the photographs of Figs. 3(a) and 3(b), the mechanism in which the tooth flank spalling occurs after the Trochoidal interference region on the dedendum starts to be damaged is obvious at a glance.

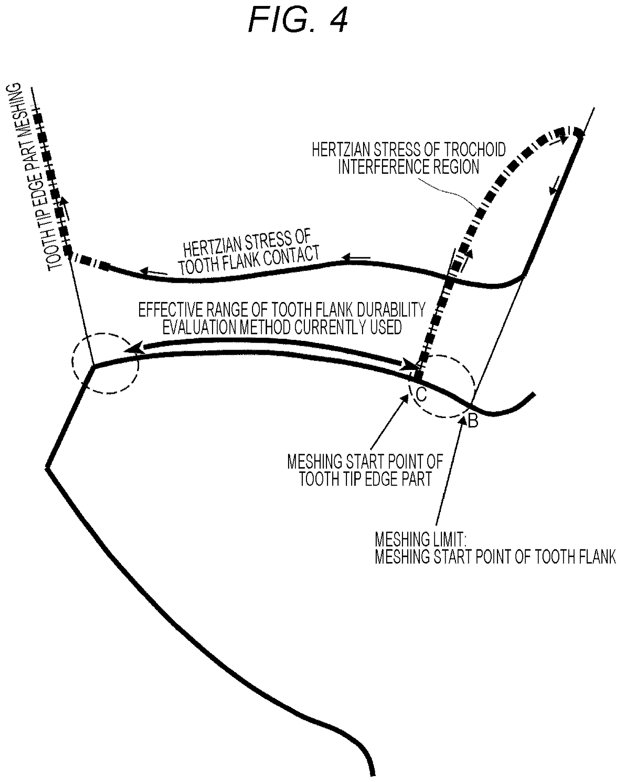

Fig. 4 schematically illustrates how the contact stress on the tooth flank of the driving gear changes in such a contact state. In the drawing, a state is drawn in which a large contact stress is generated between the tooth tip and the tooth root, heat is generated due to a large relative slip of the tooth flank at the contact portion, and a failure is extremely likely to occur due to a large shearing force acting on the surface. Specifically, as illustrated by the curve schematically illustrating a state of the Hertzian stress of the tooth flank contact in the drawing, in the Trochoidal interference region from the point C where the contact with the mating tooth flank is newly started to the point B, the contact stress rapidly increases due to the contact between the edge and the surface (In the drawing, indicated by a thick alternate long and short dash line.), and from the point B to a tooth tip direction, the contact area increases due to the contact between the surface and the surface with the mating tooth flank, so that the contact stress decreases. However, when the tooth tip reaches the addendum, the tooth tip edge part that is a free end meshes with the mating tooth flank, and the contact stress increases corresponding to the decrease in the area of the contact ellipse. Such a state causes the gear to be damaged as illustrated in Fig. 1. On the other hand, in the evaluation method of tooth flank durability currently used in all countries in the world in the present technical field, the contact between the tooth flank and the tooth flank is the theoretical basis, and Trochoidal interference is not considered at all. Therefore, substantially, the region indicated by the thick arrow in the drawing from the point C of the tooth root to the tooth tip is an effective range. That is, the tooth root and the tooth tip between the point C and the point B are out of the effective range. That is, the destructive spalling failure experienced in many practical gears often occurs outside the effective range of the tooth flank durability evaluation method, that is, from the contact between the tooth tip edge part and the dedendum, and it has become clear from recent research that a trigger (triggering failure) is generated due to the occurrence of unexpected contact stress between the tooth root and the tooth tip in the conventional tooth flank durability evaluation method.

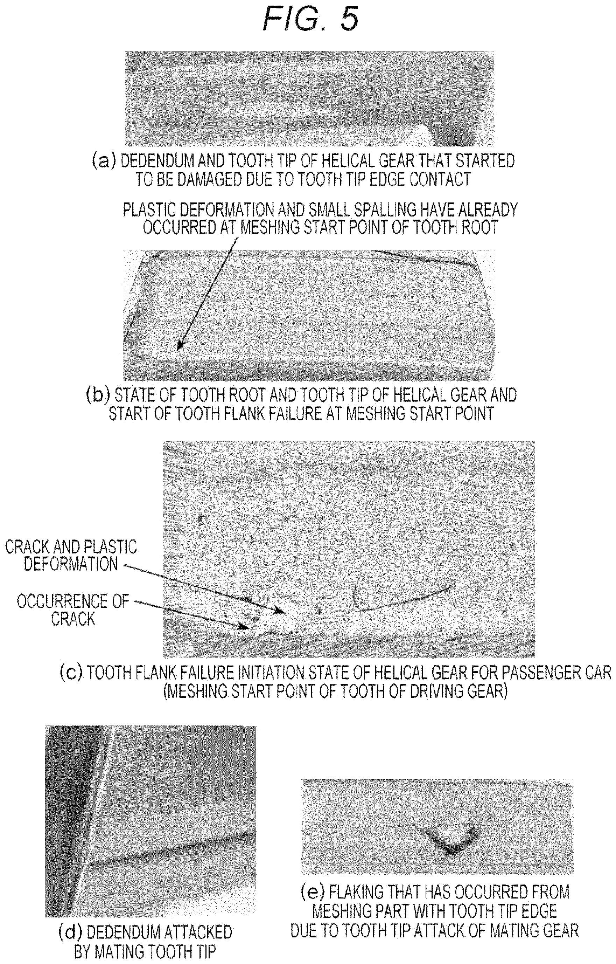

Here, an example of a failure due to the occurrence of the unexpected contact stress between the tooth root and the tooth tip of the gear will be described. Fig. 5(a) is a photograph illustrating a tooth flank state in an intermediate stage in which a helical gear is subjected to durable operation under a heavy load and the gear life has not yet reached. This helical gear shows a state in which Trochoidal interference occurs at the tooth root of the tooth width central part of the mating gear due to contact with the tooth tip edge part because crowning is applied to the tooth trace, and severe adhesive wear occurs and a failure of the gear is in progress. Fig. 5(b) is a photograph of a tooth flank state at an intermediate stage that has not yet reached the gear life in an example in which a passenger car driving gear is subjected to durable operation, observed by a replica that transfers the tooth flank state to acetyl cellulose. The tooth flank of the tooth tip edge part of the helical gear and the tooth root meshing start part becomes white, and this shows a state in which the surface roughness is crushed and smoothed due to the contact with the tooth tip edge part of the mating gear. Fig. 5(c) illustrates an enlarged meshing start point. As a result of the high pressure and high slip contact with the tooth tip edge part of the mating gear, it is recognized that the stress state of the contact portion exceeds the proof stress of the material, and micro pits and cracks start to occur. These trigger failures then develop into failures as illustrated in Fig. 1(c), but Fig. 5(c) is a pre-stage thereof. Fig. 5(d) is a photograph illustrating the dedendum of the driving gear which greatly generates heat due to the attack of the mating tooth tip and causes adhesive wear. The portion causing the adhesive wear appears white in the photograph. The lower tooth flank was heated to a high temperature even though the lower tooth flank did not come into contact with the mating tooth, so that the lubricating oil becomes oil sludge and was adhered. The tooth flank that has undergone adhesive wear is tempered due to high temperature, hardness is reduced, a failure is extremely likely to occur, and the behavior of the positive feedback system for gear failure is in progress. Fig. 5(e) is a replica image of the tooth flank in which the flaking failure illustrated in the left diagram of Fig. 1(a) has occurred, and it can be clearly confirmed that the failure has occurred from the meshing part with the tooth tip edge part of the mating gear.

The failure of the gear as described above occurs because the hard tooth tip edge part attacks the dedendum of the mating gear which is softer than the hard tooth tip edge part. Conventionally, in order to increase the strength of the gear, only increasing the tooth flank hardness has been aimed at. The most common method of case carburizing and quenching employed to increase the strength of a gear is a gear heat treatment method in which carbon is diffused from a surface of a tooth to increase its hardness. At the time of this treatment, the edge of the tooth has surfaces on more surfaces than the tooth flank, and carbon enters from all the surfaces. Therefore, it is inevitable that the edge of the tooth is harder and brittle than the tooth flank into which carbon enters only from one surface. Therefore, it is considered that since the hard edge attacked the tooth flank of the mating gear, the failure as described above is likely to occur. That is, even in a gear manufactured with the intention of obtaining a tooth flank having a constant uniform hardness, when each part is microscopically grasped, there is a hardness difference that the tooth tip edge part is harder than the dedendum, and this tendency is particularly remarkable in the case of a large gear having a large module, and there is a situation in which it is impossible to perform inspection if the hardness of the dedendum is not 70% or more of the hardness of the surface at the tooth tip at the time of manufacturing the large gear.

On the other hand, logically considering the state of occurrence of such a failure, if the hardness of the tooth tip edge part becomes lower than the dedendum of the mating gear meshing with the tooth tip edge part, such a failure is expected to be significantly reduced. As one method of manufacturing a gear in which the hardness of the tooth tip edge part is lowered, for example, a method of coating the tooth flank with a material having hardness lower than that of the base material as described in Patent Literature 2 is considered. However, the purpose of the technique described in the same Literature is to improve the adhesion between the coating layer having a surface hardness lower than the hardness of the base material and the base material, so that the base material and the coating layer are not easily peeled off even when shot peening is performed to apply residual compressive stress to the tooth flank, and residual compressive stress is applied to the tooth flank, and it is not suggested in the same Literature to prevent a failure due to the occurrence of unexpected contact stress at the tooth root and tooth tip of the gear. Then, in order to achieve the purpose of improving the durability of the tooth flank, a coating layer covered with a material having hardness lower than that of the base material is formed at a tooth flank central portion (intermediate portion between the tooth tip side and the tooth root side of the tooth flank). In this coating layer, the hardness is inclined (changed) from the outer surface side toward the base material side so that the hardness becomes closer to the base material. In order to equalize a thickness and a surface thickness of the coating layer at the tooth flank central portion, a coating layer having uniform low hardness (softer than the base material) is formed on the tooth tip side and the tooth root side. However, it is not easy to manufacture such a gear, and the manufacturing cost thereof is extremely high. Furthermore, assuming a case where a coating layer softer than the base material is formed only on the tooth flank on the tooth tip side for the purpose of simply making the hardness of the tooth tip edge part lower than the hardness of the dedendum, when such a gear is meshed and operated, the coating layer is easily peeled off at the tooth tip edge part, and the base material having high hardness is exposed, leading to a result of causing a failure of the gear.

In addition, in a gear subjected to chemical polishing after mechanical grinding of teeth, Patent Literature 3 discloses a gear intended to make a tooth tip part softer than a dedendum by making a chemical polishing method different between a tooth flank of an addendum (tooth tip part) that comes into contact with a tooth of a mating gear at the time of meshing and a tooth flank of a dedendum that does not come into contact with a tooth of the mating gear. Specifically, the technique of Patent Literature 3 discloses a method in which a protective member is applied to the dedendum during chemical polishing, and masking treatment is performed so that polishing with a polishing solution is not performed. However, such a method is adopted for the purpose of changing a tooth geometry called a tooth form by chemical polishing to improve the performance of a gear, and as a technique in this field, it is considered that the hardness of the tooth flank by chemical polishing hardly changes. This is apparent from the fact that a method of "As a method of actually measuring how the hardness changes in the depth direction from the surface of the tooth, which is performed all over the world, the hardness of the virgin surface is sequentially measured while delving the surface by electrolytic polishing (a technique of giving a potential difference to the relevant portion of chemical polishing to increase the speed of chemical polishing)." is recognized.

In view of the above problems, in Patent Literature 4, in order to fundamentally solve the cause of a failure in the tooth tip edge part and the dedendum between the gears in a meshed state, the inventor of the present invention has invented a gear in which the hardness of the tooth tip edge part softened in each tooth is softer than the hardness of the dedendum of the mating gear in the gear constituting a gear transmission as a gear based on a new idea capable of greatly reducing such a failure, and as a manufacturing method capable of manufacturing such a gear almost without increasing the cost, the inventor of the present invention has invented a method of manufacturing a soft gear in which the hardness of the tooth tip edge part is softer than the hardness of the dedendum of the mating gear by performing the tooth tip edge part softening processing step by tempering on the tooth tip edge part of each tooth with respect to the gear after quenching. The theory and effect of the invention in Patent Literature 4 are still effective at the present time.

In the gear heat treatment method by the conventional method of case carburizing and quenching, the change in tooth flank hardness of the gear from the tooth tip to a tooth root direction increases in the order of the tooth tip edge part of each tooth, the tooth flank at a middle point of a tooth height, and the dedendum in a large gear of a large module. In a small-module gear, such a change in hardness is hardly noticeable, but in a medium-small module gear, there is a tendency of such a change in hardness. Furthermore, in general, the strength calculation in the tooth flank durability evaluation method is measured on the tooth flank at the middle point of the tooth height, and the tooth tip edge part and the dedendum are not focused on in the strength calculation, but the hardness of the tooth tip edge part is generally larger than the hardness of the dedendum. This tendency is particularly remarkable in large gears. As described above, in the method of case carburizing and quenching, the edge tends to be harder than the tooth flank, which may cause a failure of the gear transmission.

From the results of the studies after the filing of Patent Literature 4, it has been found that the failure of the dedendum caused in the gear by the meshing between the gears has a phenomenon that the tooth is broken as a result of the fact that the temperature of the contact portion is extremely increased due to the slip under the continuous strong contact stress between the tooth tip and the tooth root in addition to the spalling of a tooth flank in the Trochoidal interference region, and the proof stress of the material is lowered to cause cracks. Therefore, in the present invention, the idea in Patent Literature 4 has been developed, and attention has been paid to a gear and a method of manufacturing the gear that facilitates quality control and safety management in gear manufacturing. That is, under the technical idea that the tooth tip edge part is softer than a normal gear, the present inventor has reached an idea that it is more ideal to lower the hardness of the tooth tip edge part than the hardness of the tooth flank at the middle point of the tooth height and the dedendum of the same gear.

Furthermore, in Patent Literature 4, the hardness of one tooth tip edge part and the hardness of the other dedendum of a gear in a meshed state constituting a gear transmission are compared, or the hardness of the tooth tip edge part and the hardness of the dedendum of the same tooth are compared in the same gear, and it is aimed to prevent a failure of each gear and reduce the cause of failure of the gear transmission. However, in consideration of management in manufacturing of each gear, it has been found by the research of the present inventor that there is room for further improvement.

When a softening treatment of the tooth tip edge part of the gear is performed, the middle point of the tooth height and the dedendum are usually affected by the softening treatment, and the hardness of the middle point of the tooth height and the dedendum is also slightly reduced. Although the degree of the reduction varies depending on processing conditions, it is necessary that the hardness of the tooth tip part is reduced as much as possible, and the hardness of the middle point of the tooth height and the dedendum is reduced only to a negligible degree. This is because most of the power transmission, which is an original function required for the gear, is performed on the tooth flank at the middle point of the tooth height, and the load capability of the contact tooth flank is determined by its hardness, so that the tooth flank hardness at the middle point of the tooth height must maintain an appropriate value intended at the time of design. When the treatment of softening the tooth tip edge part by the method according to Patent Literature 4 is also performed under inappropriate conditions, the hardness of not only the tooth tip part but also the middle point of the tooth height is reduced, and the power transmission performance of the gear is reduced. Therefore, it is essential that the processing of reducing the hardness of the tooth tip for the purpose of removing the large cause of the tooth flank failure is also a processing technique that does not reduce the hardness of the middle point of the tooth height. When the tooth tip edge part is softened, the degree of hardness reduction decreases in the order of the tooth tip edge part, the middle point of the tooth height, and the dedendum. Therefore, the hardness of the middle point of the tooth height needs to be suppressed to a decrease of, for example, HV 80 or less as compared with that before the treatment or as compared with the value instructed in design, and the hardness of the tooth tip edge part is desirably decreased by about HV 100 or more as compared with that. Then, a difference in hardness between the dedendum and the tooth tip edge part becomes larger than that, and the margin for safety of the tooth root becomes larger.

Since the driving gear and the driven gear are usually manufactured completely separately, it is difficult to compare the hardness of the tooth root of the driving gear with the hardness of the tooth tip of the driven gear at the time of gear manufacturing in an actual production site. From the viewpoint of gear manufacturing management, it is desirable that manufacturing management processing can be performed independently for each of the driving gear and the driven gear. If the tooth tip hardness of the driven gear is reduced to, for example, 0.8 times as large as that in the untreated case by the softening treatment of the tooth tip edge part, the ratio of the hardness of the tooth tip part of the driven gear to the dedendum of the driving gear, which is an index for determining the strength of the tooth root of the driving gear, is also 0.8 times as large as that in the untreated case, and considering that the yield strength of the tooth flank is proportional to the tooth flank hardness, the tooth root of the driving gear is 1/0.8 = 1.25 times as safe as compared with the untreated case. That is, by reducing only the hardness of the tooth tip without substantially reducing the hardness of the middle point of the tooth height or the dedendum, it is possible to manufacture a gear having a low failure occurrence probability even when meshing with a mating gear without causing a problem in gear manufacturing management.

From such a viewpoint, it is an object of the present invention to provide a gear and a method of manufacturing the gear, which can realize reduction in failure of the gear itself and reduction in failure of a gear transmission while making manufacturing management and quality control of each gear simple and easy, greatly contributes to quality control and improvement in safety, and does not involve deformation processing of a tooth form at the time of manufacturing.

### Solution to Problem

The present invention is a gear that cannot be manufactured by conventional manufacturing processes, that is, a gear in which hardness of a tooth tip edge part of each tooth in a state of being softened by tempering or annealing is softer than hardness of a tooth flank at the middle point of the tooth height. The gear according to the present invention is characterized in that the hardness of the tooth flank central portion and the dedendum does not decrease or the hardness decreases extremely slightly by tempering or annealing treatment. The target to be compared with the hardness of the tooth tip edge part of each tooth can be a tooth flank at the middle point of the tooth height of any tooth of the same gear, but can also be a tooth flank at the middle point of the tooth height of the same tooth.

Due to the softening treatment of the tooth tip edge part in the present invention, when the softening reaches not only the tooth tip edge part but also the middle point of the tooth height and the dedendum, the hardness of the middle point of the tooth height is significantly reduced compared to the dedendum. The tooth tip edge part has the most significant hardness decrease. Therefore, in a gear transmission to which the gear of the present invention is applied, at the time of meshing of the gears, when the tooth tip edge part of the driven gear, which is softer than the tooth tip edge part of the driven gear, comes into contact with the tooth flank of the dedendum of the driving gear, the tooth tip edge part of the driven gear, which is relatively low in hardness, is naturally crushed (plastically deformed) and rounded, so that a failure to the tooth flank of the dedendum of the driving gear can be easily prevented. By using the technique of the present invention, contrary to the conventional method to raise hardness of a tooth flank for increasing gear strength, the tooth tip edge part that is not directly related to power transmission is actively made soft by tempering or annealing treatment, so that the probability of failure and the degree thereof can be reduced. According to such a technique, similarly to the invention of Patent Literature 3, the gear life can be lengthened, and the cause of a failure of a device incorporating the gear transmission can also be reduced. Note that, since the tooth tip edge parts of the driving gear and the driven gear and the tooth tip surfaces extremely close to the tooth tip edge parts are hardly involved in power transmission in the gear transmission, even if deformation such as rounding occurs due to contact with the dedendum of the mating gear, the deformation does not affect the operation of the gear transmission, and the failure of the dedendum can be prevented according to the present invention, and the softened tooth tip edge part hardly causes chipping, which greatly contributes to the life extension of the gear transmission.

As described above, by softening the tooth tip edge part that would be the hardest region in the related art, and comparing the hardness of the tooth tip edge part with the hardness of the tooth flank at the middle point of the tooth height, it becomes easy to test whether the distribution of the hardness of each part in a single gear is softer in the tooth tip edge part than in the tooth flank at the middle point of the tooth height as designed, and it becomes possible to make the method of gear manufacturing control and quality control extremely simple and easy. That is, in the gear transmission to which the gear of the present invention is applied, it is possible to reduce the occurrence of failure caused by the meshing between the gears, to make the safety management simple and easy, and to dramatically improve the quality management and the safety of the gear and the gear transmission.

Note that gears to be subjected to the present invention correspond to all types of gears such as spur gears, helical gears, bevel gears, screw gears, hypoid gears, internal gears, rack and pinions, and worm and worm wheels, and include both driving gears and driven gears. In the present invention, the tooth tip edge part refers to a limited and constant region (In particular, a range within about 0.2 m ₙ from the tooth tip edge in a tooth form direction. "m ₙ" is a tooth right angle module.) from the addendum tooth flank to the tooth flank in the tooth form direction including the tooth tip edge of each tooth. Furthermore, the middle point of the tooth height refers to a portion of about a half of the entire length of the tooth height of each tooth of the gear (the vicinity of the portion through which the pitch circle passes). Note that since the hardness of each part of the gear varies for each measurement point, the hardness (or softness) of the tooth flank of the tooth tip edge part and the middle point of the tooth height is evaluated by an average value of the hardness measured at a plurality of points of the region included in the tooth tip edge part and the middle point of the tooth height, and the same applies to the following description of each invention.

In a single gear, as described above, in a case where the hardness of the tooth tip edge part is compared with the hardness of the dedendum on the assumption that the tooth tip edge part is softer than the tooth flank at the middle point of the tooth height, if the tooth tip edge part is softer than the dedendum, the tooth tip edge part is automatically rounded by losing the hardness of the dedendum of the mating gear immediately after the gear starts to operate, so that a failure due to Trochoidal interference can be suppressed, and a spalling failure of the dedendum can be greatly reduced. However, a gear in which the tooth tip edge part and the dedendum have substantially the same hardness does not depart from the basic idea of the present invention.

It is desirable that the hardness of the tooth tip edge part is softer than the hardness of the tooth flank at the middle point of the tooth height and softer than the hardness of the dedendum. Specifically, from the results of experiments to be described later, it is desirable that the hardness of the tooth tip edge part is HV120 or more softer than the tooth flank at the middle point of the tooth height, and HV170 or more softer than the dedendum. As the hardness of the tooth tip edge part decreases, the tooth tip edge part is easily rounded by contact with the tooth flank at the middle point of the tooth height of the mating gear or the dedendum in a case where the gear transmission is formed by combining the same type of gear as the mating gear. Therefore, it is possible to reduce the probability of occurrence of failure of the dedendum and the degree of the failure.

In the gear of the present invention, the tooth tip edge part softer than the tooth flank of the middle point of the tooth height is desirably a tooth tip edge part in a tempered or annealed state. Note that, in the gear manufacturing process, the entire gear is usually quenched and tempered, but after the process, only the tooth tip edge part is further tempered or annealed as a limited target, whereby a tooth tip edge part in a tempered or annealed state is obtained. Tempering is generally used as a step of adjusting hardness by reheating a steel structure that has become hard and brittle due to martensite by quenching, and imparting viscosity and toughness to the structure while softening the steel structure. However, the tempering is usually a heat treatment performed on the entire component (gear in the present invention) or a part of the component in the case of a shaft, and only a very small part (local part) of the component such as an edge of a tooth tip is not usually performed. Furthermore, annealing is a heat treatment step of removing internal strain such as work hardening and residual stress generated in a working step and softening a structure, but also tempering or annealing only a very small part (local part) of a component such as an edge of a tooth tip is not usually performed. In the present invention, only the tooth tip edge part is in a state of being tempered or annealed, so that only the tooth tip edge part is selectively soft and has properties of viscosity and toughness, whereby a gear having the tooth tip edge part soft with respect to the dedendum can be obtained. It is considered that it is difficult in practice to manage the absolute value of the heated local temperature state of the tooth tip edge part, and particularly in the case of local short-time heating, it is generally impossible to determine which phenomenon of tempering or annealing has occurred. However, even in the case of tempering in which the heating temperature does not exceed the transformation point, the hardness of the heated portion decreases as the temperature increases, which is similar to annealing. However, when heat treatment simulation is performed, since the maximum temperature is clearly displayed, it may be interpreted that annealing has occurred in a case where the maximum temperature exceeds 727°C, and tempering has occurred in a case where the maximum temperature does not exceed 727°C.

As a method of manufacturing a gear according to the present invention, a method of manufacturing a gear in which a hardness of a tooth tip edge part is softer than a hardness of a tooth flank at a middle point of a tooth height by undergoing a tooth tip edge part softening treatment step by tempering or annealing for a tooth tip edge part of each tooth with respect to a gear after quenching is suitable.

In the tooth tip edge part softening treatment step, it is preferable to perform a heat treatment with the tooth tip part of each tooth as a specific target, and as one of a tempering method or an annealing method suitable for the heat treatment, a tempering method or an annealing method by induction heating for the tooth tip edge part can be mentioned. In this case, it is possible to adopt a method in which an induction heating coil is disposed in the vicinity of the tooth tip of a gear, the coil is energized under a temperature and time condition corresponding to the material of the gear to heat the tooth tip edge part, and then the tooth tip edge part is uniquely and selectively tempered or annealed and softened by natural cooling.

### Advantageous Effects of Invention

Since the gear of the present invention softens the tooth tip edge part more than the tooth flank at the middle point of the tooth height of the gear by tempering or annealing treatment, it is possible to perform manufacturing and quality control much more easily than comparing the hardness with the mating gear constituting the gear transmission, and it is possible to reduce the number of management steps and cost for safety. As a result, when the gear transmission is operated, the tooth tip edge part comes into contact with the dedendum of the tooth of the mating gear to cause plastic deformation and be rounded, which leads to reduction in the probability of occurrence of failure and the degree of failure on the tooth flank of the mating gear. At the same time, brittle fracture of the relatively soft tooth tip edge part can also be prevented, and as a result, the gear life can be significantly extended, and failure of the gear transmission and a device incorporating the gear transmission can also be prevented. Furthermore, the gear in which only the tooth tip edge part of the present invention is softened can be manufactured at low cost by undergoing a step of locally heating and softening the tooth tip edge part using an induction annealing method (annealing method by an induction heating method) or the like.

### Brief Description of Drawings

Figs. 1(a) to 1(f) are photographs illustrating an example of a tooth failure and an example of an accident occurring in a conventional gear.

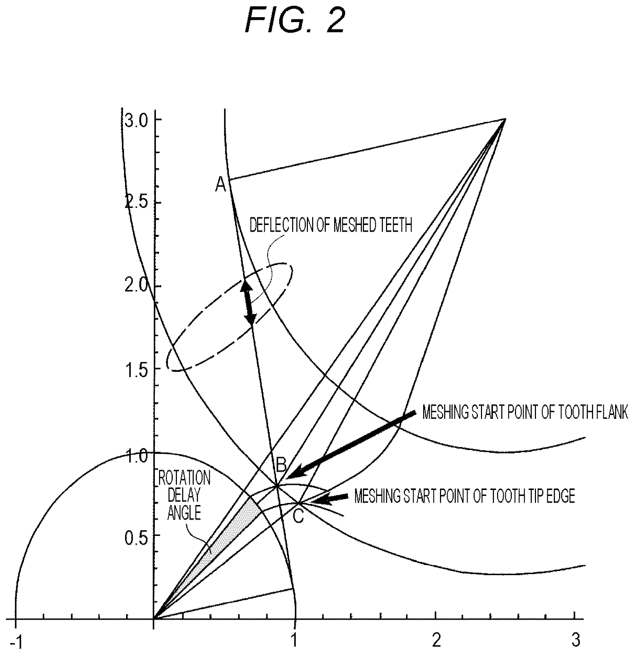

Fig. 2 is an explanatory diagram illustrating a contact state of a tooth tip edge that does not follow a conventional gear meshing theory.
Figs. 3(a) and 3(b) are a schematic diagram illustrating an attack state on a dedendum by a tooth tip edge of a conventional mating gear, and photographs illustrating a state of the dedendum attacked by crowning form correction of tooth lead.
Fig. 4 is a schematic diagram illustrating a state in which an unexpected contact stress occurs due to contact between a tooth root and a tooth tip edge part in a conventional gear.
Figs. 5(a) to 5(e) are diagrams illustrating a photograph of an example of a failure caused by an attack on a dedendum by a tooth tip edge part in a conventional gear.
Fig. 6 is a diagram illustrating a gear pair in a meshed state according to an embodiment of the present invention.
Figs. 7(a) and 7(c) are enlarged views of a front tooth form and a tooth tip part thereof immediately after quenching of the gear according to the embodiment, respectively, and Figs. 7(b) and 7(d) are enlarged views of a front tooth form and a tooth tip part after driving of the gear according to the embodiment, respectively.
Fig. 8 is a diagram illustrating a method of manufacturing a gear according to the embodiment.
Figs. 9(a) and 9(b) are diagrams illustrating an example of a tooth tip edge part softening step in the method of manufacturing the gear according to the embodiment.
Figs. 10(a) and 10(b) are diagrams illustrating an example of a tooth tip edge part softening step in the method of manufacturing the gear according to the embodiment.
Fig. 11(a) is a schematic diagram illustrating a gear in a local heating simulation for a tooth tip part of a carburized and quenched gear, Fig. 11(b) is a specification table of the gear, and Fig. 11(c) is a diagram illustrating heating conditions.
Fig. 12(a) is a diagram illustrating an arrangement mode of a tooth of a gear and a heating coil in an analysis model of the simulation, Fig. 12(b) is a schematic diagram illustrating an eddy current flowing through the gear, and Fig. 12(c) is a schematic diagram illustrating a tooth tip softening region.
Fig. 13(a) is a diagram illustrating a method of calculating converted hardness in an analysis model of the simulation, and Fig. 13(b) is a diagram illustrating a tempering parameter.
Fig. 14(a) is a diagram illustrating a temperature distribution and a converted hardness distribution at the end of heating, Fig. 14(b) is a diagram illustrating a converted hardness of a tooth tip, and Fig. 14(c) is a diagram illustrating a converted hardness of a tooth tip softening boundary, as analysis results of the simulation.
Figs. 15(a) to 15(c) are diagrams illustrating a chemical composition and specifications of a sample gear, and an enlarged photograph of a tooth before tempering treatment.
Fig. 16 is a diagram illustrating a photograph of a state of a sample gear after performing an annealing treatment on each of teeth No. 7 to No. 17.
Fig. 17 is a diagram illustrating tempering treatment conditions for the sample gear.
Figs. 18(a) and 18(b) are diagrams illustrating an examination region of hardness distribution for each tooth of a sample gear and a measurement result graph of hardness distribution of a reference tooth No. 22.
Fig. 19 is an enlarged photograph illustrating a state of each of teeth No. 7 to No. 17 after the sample gear is subjected to a tempering treatment.
Fig. 20 is graphs illustrating measurement results of hardness distribution of each of teeth No. 7 to No. 12 of the sample gear.
Fig. 21 is graphs illustrating measurement results of hardness distribution of teeth No. 13 to No. 17 of the sample gear.
Fig. 22 is a diagram illustrating, as a list, the degree of reduction in hardness of each part and the difference in hardness of each part due to the tempering treatment of each tooth of the sample gear.

### Description of Embodiments

Hereinafter, an embodiment of the present invention will be described with reference to the drawings.

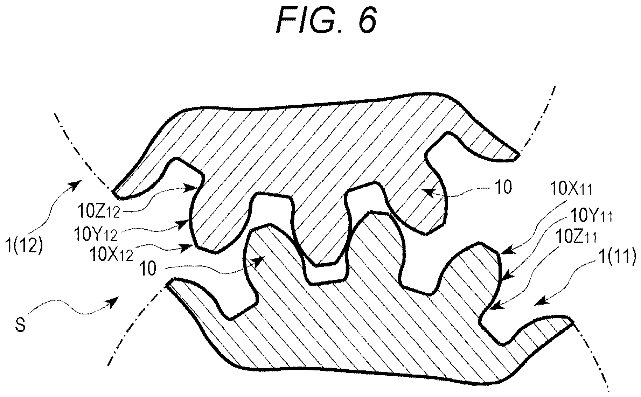

In the present embodiment, an example of a gear pair S including a driving gear 11 and a driven gear 12 to which the gear 1 of the present invention is applied and several examples of a method of manufacturing the gear 1 will be described. Here, in order to simplify the description, a pair of gears 1 is taken as an example of the gear pair S (it is assumed that the driving gear 11 and the driven gear 12 are the same spur gear for simplification of the description. However, this description is also effective in a case where the gear pair S is configured using the driving gear 11 and the driven gear 12 which are different types of gears.), and Fig. 6 is an enlarged cross-sectional view of a meshing part thereof.

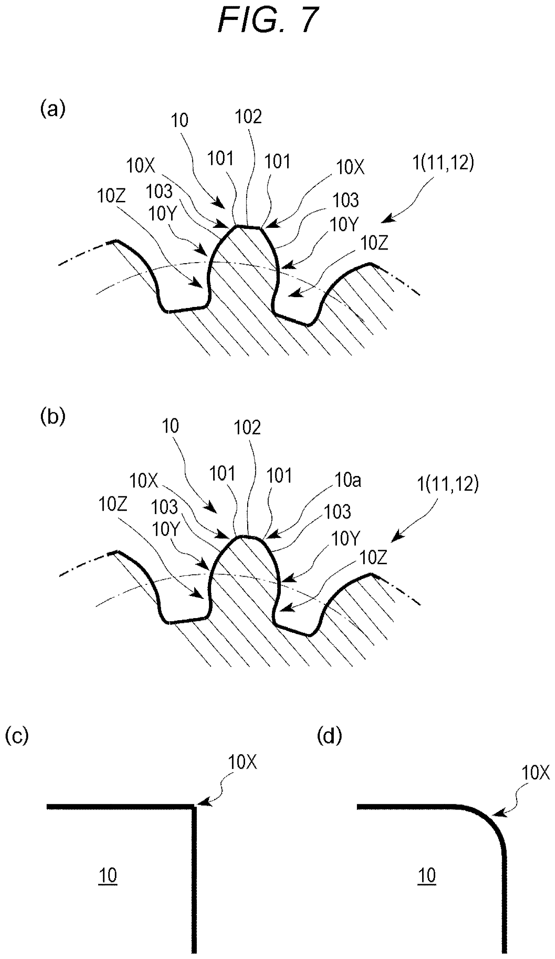

Fig. 7(a) illustrates a partially enlarged front tooth form of some teeth of the gear immediately after quenching, and Fig. 7(c) illustrates an exaggerated enlarged tooth tip edge part 10X thereof. Also in the gear 1 (the driving gear 11 and the driven gear 12) in which the tooth tip edge part is softened, the shape of the tooth does not change. However, the gear 1 is manufactured such that the tooth tip edge part 10X of each tooth 10 is softer than a tooth flank 10Y at a middle point of a tooth height. Although only some of the teeth 10 of the gear 1 are illustrated in the drawing, a relationship between a hardness of the tooth tip edge part 10X and a hardness of the tooth flank 10Y at the middle point of the tooth height is substantially the same for all the teeth 10. Here, in the present embodiment, the tooth tip edge part 10X is defined as a fixed region defined from a tooth tip surface 102 to a tooth flank 103 in a tooth form direction including a tooth tip edge 101 of each tooth 10, and particularly refers to a certain range (a range within about 0.2 m ₙ) from the tooth tip edge 101 in the tooth form direction. The tooth tip edge part 10X is out of the effective range on a tooth tip side of the tooth flank durability evaluation method that is usually used. The middle point of the tooth height is a portion having a length of around 1/2 of a total tooth length (total length from the tooth root to the tooth tip) of each tooth 10. Normally, the hardness, strength, and the like of the tooth are designed and evaluated on the tooth flank 10Y at the middle point of the tooth height.

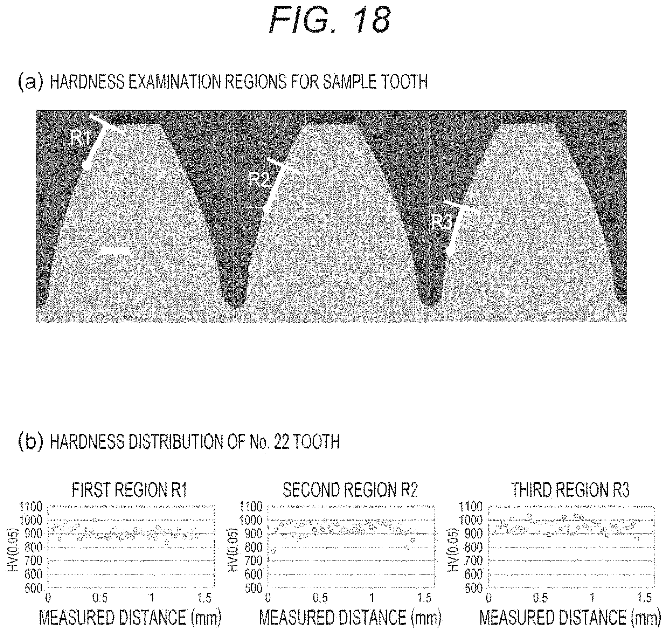

In the small-sized gear, a hardness of the middle point of the tooth height and a hardness of the dedendum of the gear after the quenching treatment are almost the same as the experience in the gear quenching treatment which has been widely used in the machine industry. This is also recognized in experimental results (described later) illustrated in Fig. 18. Now, in Fig. 6, it is assumed that the hardness H _{10X12} of the tooth tip edge part 10X₁₂ of the driven gear 12 is reduced to, for example, 0.8 times the hardness H^{~}_{10X12} of the untreated case by the softening treatment of the tooth tip edge part (H_{10X12} = 0.8 ^{∗} H^{~}_{10X12}). At this time, the hardness of the dedendum also tends to decrease somewhat due to the influence of the softening treatment of the tooth tip edge part 10X₁₂, but the degree thereof is extremely small. If the processing is performed such that the hardness of the dedendum is lowered, the hardness of the middle point of the tooth height is further lowered, and the power transmission performance of the gear is extremely deteriorated, so that the softening processing of the tooth tip edge part is not possible. That is, the softening treatment of the tooth tip edge part 10X₁₂ needs to be performed in a situation where the hardness of the middle point of the tooth height (tooth flank 10Y) and the hardness of the dedendum (tooth flank 10Z) hardly change. Therefore, when the effect of the softening treatment of the tooth tip edge part 10X is examined, it may be considered that the hardness of the dedendum 10Z₁₂ does not change before and after the treatment. In a case where the softening treatment of the tooth tip edge part 10X₁₂ is applied only to the driven gear 12, a ratio H_{10X12}/H^{~}_{10Z11} of the hardness H_{10X12} of the tooth tip part of the driven gear 12 to the hardness H^{~}_{10Z11} of the tooth flank 10Z₁₁ of the dedendum of the driving gear 11, which is an index for determining the strength of the tooth root of the driving gear 11, is 0.8 times as large as that H^{~}_{10X12}/H^{~}_{10Z11} in the untreated case, and the tooth root of the driving gear 11 is 1/0.8 = 1.25 times as large as that in the untreated case. Even if the driving gear 11 is also subjected to the softening treatment of the tooth tip edge part 10X₁₁ similar to that of the driven gear 12 and the hardness of the tooth tip edge part 10X₁₁ is reduced from H^{~}_{10X11} to H_{10X11}, the hardness H_{10Z11} of the dedendum 10Zn is not reduced as compared with the hardness H^{~}_{10Z11} in an untreated case, and thus the same description is true. That is, even if only the hardness of the tooth tip edge part 10X is reduced with respect to the hardness of the dedendum 10Z and the hardness of the middle point of the tooth height 10Y by each gear 1 alone, the risk of occurrence of a failure of the gear 1 can be reduced.

Note that, when the gear 1 subjected to the softening treatment of the tooth tip edge part 10X is operated, the softened tooth tip edge part 10X is plastically deformed or worn, and the shape thereof is naturally rounded as illustrated in Figs. 7(a) and 7(c) to Figs. 7(b) and 7(d) (Fig. 7(b) is a partially enlarged view of the front tooth form corresponding to Fig. 7(a), and Fig. 7(d) is an enlarged view in which the tooth tip edge part 10X corresponding to Fig. 7(c) is exaggerated.). This rounded tooth tip shape naturally causes a situation in which machining instructed in the design drawing is conventionally performed, and the tooth tip shape is corrected with a lot of effort to improve the operation performance of the gear 1 during operation. That is, the gear 1 subjected to the softening treatment of the tooth tip edge part 10X brings about an effect of automatically improving the operation performance with the operation. Such a reduction in the failure possibility of the gear 1 can be evaluated at the time of manufacturing the gear 1 of the present embodiment. That is, in the manufactured gear 1, if the hardness of the tooth tip edge part 10X is softer than the hardness of the tooth flank 10Y at the middle point of the tooth height of the same tooth 10 or the hardness of the tooth flank 10Y at the middle point of the tooth height of any tooth 10 of the same gear 1, the gear transmission S is configured by combining the gear 1 having the same property as the mating gear. Therefore, it can be known in advance that the tooth tip edge part 10X of one gear 1 is less likely to damage the dedendum 10Z of the mating gear 1 at the time of driving. Therefore, it is possible to easily perform the manufacturing management and the quality management of each gear 1, and it is possible to guarantee the reduction of the failure of the gear transmission S in advance.

Furthermore, in the single gear 1, even in a case where the tooth tip edge part 10X is softer than the tooth flank 10Y at the middle point of the tooth height, but has the same degree of hardness as the dedendum 10Z, or even in a case where the tooth tip edge part 10X is harder than the dedendum 10Z, since the hardness is reduced as compared with the case of the conventional untreated gear, at least the failure of the dedendum 10Z can be reduced, and the efficiency in manufacturing control and quality control of the gear 1 itself can be secured. Furthermore, even in a case where the gear pair S is configured by combining the gears 1 having different properties, the possibility of a failure to the mating gear 1 and the possibility of failure of the gear pair S can be expected to be reduced as compared with the related art.

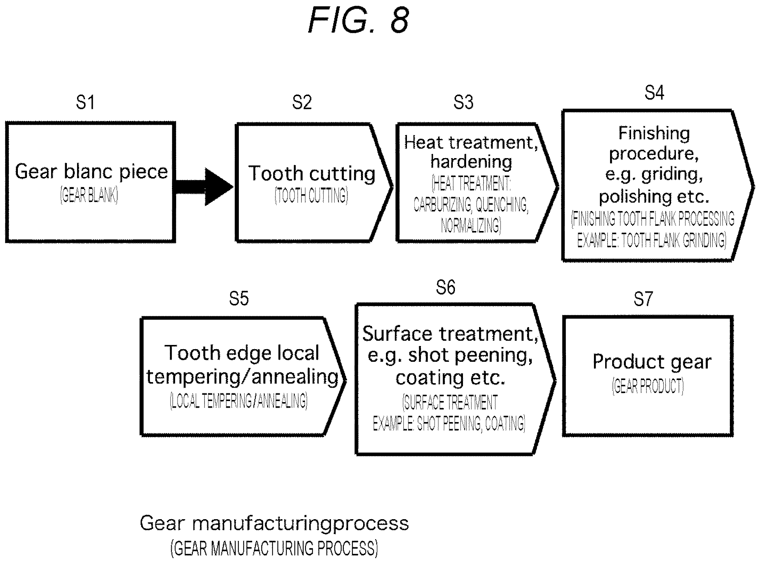

Next, a method of manufacturing the gear 1 of the present embodiment will be described. In the case of the present embodiment, the gear 1 is assumed to be a gear that is cut and finished by grinding or the like. Fig. 8 illustrates a schematic manufacturing process. In a general manufacturing process, a blanking step S1 of creating a gear material (gear blank) by cutting or the like using a lathe or the like, a tooth cutting step S2 of cutting the gear material, a heat treatment step S3 of subjecting the material after tooth cutting to heat treatment such as carburization quenching and normalizing (burning out), and then a finishing step S4 such as tooth flank grinding finish in order to increase gear accuracy are often performed. However, although some gears may not be subjected to the finishing step S4, the present invention is also effective in such a case. Conventionally, the gear product S7 is used as a product gear in this state, or is formed through a surface treatment step S6 of performing shot peening, coating, or the like, and a local tempering treatment or local annealing treatment step (hereinafter, referred to as a "tooth tip edge part softening step S5") for the tooth tip edge part 10X is added between the finishing step S4 and the surface treatment step S6. In the present embodiment, the tooth tip edge part softening step S5 for softening only the tooth tip edge part 10X characteristic in the present invention is performed. Several types of this processing will be described below. The tooth tip edge part softening step S5 may be performed before or after the final finish processing of the tooth flank. In the tooth tip edge part softening step S5 described in the present embodiment, similarly to the general induction tempering method or induction annealing method, the object is induction-heated using the high frequency power supply, and the tempering treatment or the annealing treatment is performed. However, a significant difference from the normal induction quenching method, induction tempering method, and induction annealing method is that only the tooth tip edge part 10X is locally heated using a higher frequency power supply than the conventional one and using a higher frequency skin effect instead of heating the entire tooth 10 of the gear 1 to be treated.

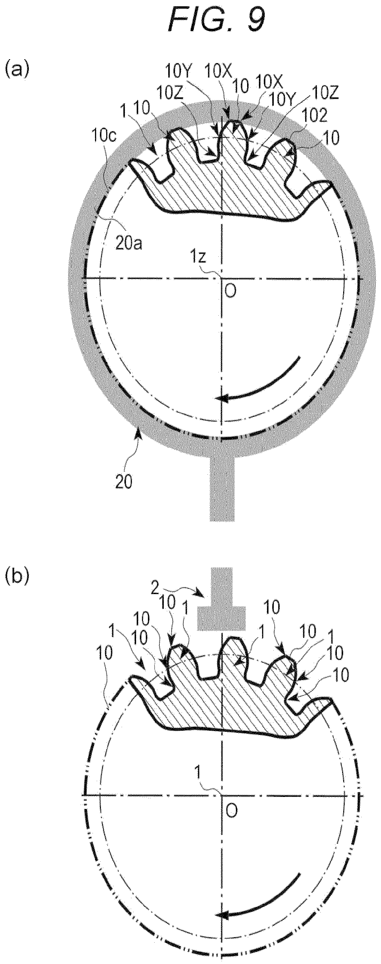

First, as an example, the tooth tip edge part softening step S5 of softening only the tooth tip edge part 10X of each tooth 10 of the gear 1 by a circular coil 20 will be described. As illustrated in Fig. 9(a) as a cross-sectional view, the circular coil 20 having a diameter slightly larger than a tooth tip circle 10c is disposed in the vicinity of the outer side of a tooth tip surface 102 of the gear 1 to be treated so as to be substantially concentric with a gear shaft 1z. The circular coil 20 is connected to a high-frequency power supply (not illustrated), and heats the tooth tip as a target by energizing the circular coil 20. At this time, in order to average the state of electromagnetic induction heating with respect to the tooth tips of the respective teeth 10 as much as possible, it is desirable to execute energization to the circular coil 20 while rotating the gear 1 about the gear shaft 1z (arrow direction in the drawing). In this case, in addition to the high frequency and the applied voltage/current, as a function of a gap difference between the tooth tip circle 10c and an inner circumference 20a of the circular coil 20 due to the rotation of the gear 1, a high-frequency fluctuating magnetic field having a substantially sinusoidal shape acts on the tooth tip edge part 10X, and heating is performed with time. After a lapse of a little time, when the energization is stopped at a point in time when the temperature distribution in the vicinity of the tooth tip edge part 10X becomes appropriate, the tooth tip is naturally cooled by heat dissipation to the atmosphere and heat conduction to the inside of the gear 1, the tooth tip edge part 10X is annealed and softened, and the tooth tip edge part softening step S5 ends.

In this example, the tooth tip edge part softening step S5 for a spur gear has been described as the gear 1. However, in the case of the gear 1 having a wide tooth width or when the entire gear 1 cannot be simultaneously heated at once by the circular coil 20, the circular coil 20 may be heated while being moved in parallel with the gear shaft 1z, or this operation may be repeated a plurality of times. Furthermore, instead of the circular coil 20, the coil may have a shape deviated from the perfect circular cross section or a polygonal shape. In this case, it is preferable to heat the gear 1 while rotating the gear 1. Moreover, the circular coil 20 can have a circular cross section without a break, but in order to facilitate installation of the circular coil 20 on the gear 1, it is also possible to use a partially cut circular coil or a circular coil that can be opened and closed by providing a break or a hinge in a part thereof.

The second example of the tooth tip edge part softening step S5 is an example in which a tempering treatment or an annealing treatment is performed on the tooth tip of the gear 1 using a plate-shaped coil. In this example, as illustrated in Fig. 9(b), one plate-shaped coil 21 connected to a high-frequency power source is used, and similarly to the circular coil 20 of the first example, the plate-shaped coil 21 is slightly separated from the tooth tip circle 10c in the vicinity of the outer side of the tooth tip surface 102 of the gear 1. When the plate-shaped coil 21 is energized with high frequency while the gear 1 is rotated (arrow direction in the drawing) in this state, a state in which the tooth tip edge part 10X is heated when the tooth tip passes through the vicinity of the magnetic field generated by the plate-shaped coil 21 and the temperature is naturally cooled immediately and changes in a substantially pulse shape is repeated. In this example, the heating time can be adjusted by changing the rotational speed of the gear 1, and it is easy to set the optimum tempering condition or annealing condition of the tooth tip edge part 10X. Then, when the energization is stopped when the temperature distribution in the vicinity of the tooth tip edge part 10X becomes appropriate after the lapse of a predetermined rotation speed or rotation time, the tooth tip is naturally cooled by heat dissipation to the atmosphere and heat conduction to the inside of the gear 1, the tooth tip edge part 10X is annealed and softened, and the tooth tip edge part softening step S5 ends. Advantages of the tooth tip edge part softening step S5 in this example include that the coil can be easily manufactured even for a large gear, that the gear 1 can be extremely easily installed with respect to a plate-shaped coil pair 21, and that one coil 21 can cope with gears having different sizes.

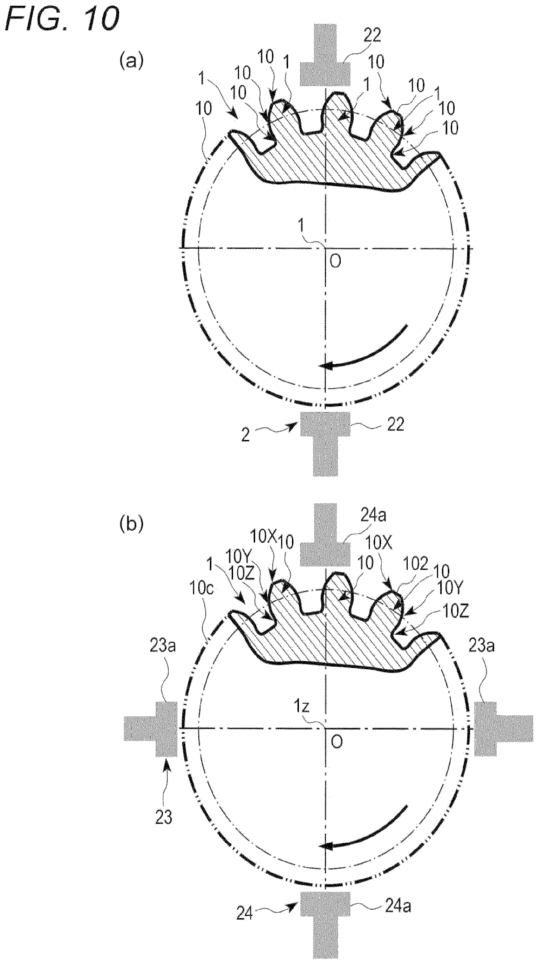

The third example of the tooth tip edge part softening step S5 is an example in which a tempering treatment or an annealing treatment is performed on the tooth tip of the gear 1 using two plate-shaped coils. In this example, as illustrated in Fig. 10(a), a plate-shaped coil pair 22 including two plate-shaped coils 22a, 22a connected to a high-frequency power source is used, and each plate-shaped coil 22a is disposed to face each other in, for example, a diametrical direction of the gear 1, and each plate-shaped coil 22a is slightly separated from the tooth tip circle 10c in the vicinity of the outer side of the tooth tip surface 102 of the gear 1 as in the case of the first example and the second example. When high-frequency current is applied to each of the plate-shaped coils 21a while the gear 1 is rotated (arrow direction in the drawing) in this state, a state in which the tooth tip edge part 10X is heated when the tooth tip passes near the magnetic field generated by each of the plate-shaped coils 22a and is naturally cooled immediately and changes in temperature in a substantially pulse shape is repeated. In this example, by arranging the two plate-shaped coils 22a, 22a at positions corresponding to 180 degrees of the diameter of the gear to be treated (gear 1), it is possible to prevent the eccentricity or the like of the gear 1 from causing the heating state of each tooth 10 of the gear 1 to be non-uniform. Furthermore, high-frequency power supplies having different frequencies can be connected to each of the plate-shaped coils 22a. Thus, by changing the frequency of the voltage and the current at the time of energization for each of the plate-shaped coils 22a, 22a, a depth of the eddy current heat source in the material of the tooth tip part (inside the gear 1), the degree of concentration of heat generation on the tooth tip edge part 10X, and the like can be changed, and the temperature distribution in the vicinity of the tooth tip edge part 10X can be more appropriately adjusted. On the other hand, high-frequency power supplies having the same voltage and the same frequency can be used for the two plate-shaped coils 22a, 22a so that the magnetic fields generated by the two plate-shaped coils 22a, 22a disposed at both side positions of the diameter of the gear 1 are equal (Both plate-shaped coils 22a, 22a may be connected to a common high-frequency power supply.). As a result, the influence of the variation in a distance between each plate-shaped coil 22a and the tooth tip circle 1c of the gear 1 on the heat generation of the tooth tip part is canceled, and it is possible to create a situation in which all the tooth tip parts are uniformly heated regardless of the eccentricity of the gear 1 or the inaccuracy of the installation position of the gear 1. In this example, the heating time can be adjusted by changing the rotational speed of the gear 1, and it is easy to set the optimum tempering condition or annealing condition of the tooth tip edge part 10X. Then, when the energization is stopped when the temperature distribution in the vicinity of the tooth tip edge part 10X becomes appropriate after a lapse of a predetermined rotation speed or rotation time, the tooth tip is naturally cooled by heat dissipation to the atmosphere and heat conduction to the inside of the gear 1, the tooth tip edge part 10X is annealed and softened, and the tooth tip edge part softening step S5 ends. Advantages of the tooth tip edge part softening step of this example include that the coil is easily manufactured and that the gear 1 is extremely easily installed with respect to the plate-shaped coil pair 21.

As in the second example and the third example, in the tooth tip edge part softening step S5 using the plate-shaped coil, since the number of the plate-shaped coils can be one or more, a plurality of arbitrary plate-shaped coils can be applied. As an example, the fourth example of the tooth tip edge part softening step is also an example in which a tempering treatment or an annealing treatment is performed on the tooth tip of the gear 1 using a plate-shaped coil. However, this example is different from the third example described above in that two plate-shaped coil pairs 23, 24 each connected to a high-frequency power source are used as illustrated in Fig. 10(b). In the fourth example, a pair of plate-shaped coils 23a, 23a constituting the plate-shaped coil pair 23 and a pair of plate-shaped coils 24a, 24a constituting the plate-shaped coil pair 24 are disposed to face each other with an angular phase changed by 90 degrees in the diameter direction of the gear 1, and similarly to the first to third examples, the plate-shaped coils 23a, 24a are slightly separated from the tooth tip circle 10c in the vicinity of the tooth tip surface 102 of the gear 1. In this case, by changing the frequency of the voltage and the current at the time of energization between the plate-shaped coil pair 23 and the plate-shaped coil pair 24, the depth of the eddy current heat source in the material of the tooth tip part (inside the gear 1), the degree of concentration of heat generation on the tooth tip edge part 10X, and the like are changed, and the temperature distribution in the vicinity of the tooth tip edge part 10X can be more appropriately adjusted. Similarly to this example, the number of coil pairs including a pair of plate-shaped coils can be further increased.

In the tooth tip edge part softening step S5 as described above, as described in the following embodiment, the tooth tip edge part can be annealed by heating in a very short time, and the method is also simple. Therefore, it is only necessary to add the tooth tip edge part softening step to a normal gear 1 manufacturing step, and it is possible to efficiently manufacture the gear 1 with less failure without causing a large increase in cost. In the tooth tip edge part softening step described above, the softening process of the tooth tip edge part 10X for a spur gear has been described, but in these examples, the present invention can be applied to all gears in which teeth are formed along the circumferential direction. Furthermore, a bevel gear, a hypoid gear, and the like can be designed to be installed in a state slightly away from the top of the tooth tip similarly to the shape of the heating coil and the above description, so that the similar softening treatment of the tooth tip edge part can be performed. Furthermore, in the case of an internal gear, the tooth tip edge part softening step can be performed by various methods by induction annealing, such as heating with a coil disposed on the inner peripheral side of a gear on which teeth are formed, and heating with a plate-shaped coil in the case of a rack. In addition to the induction annealing method, it is also possible to perform the local tooth tip edge part softening step S5 by heating only the tooth tip edge part of the gear by laser irradiation as a target and then naturally cooling the tooth tip edge part. In the tooth tip edge part softening step S5 by any method, the energizing time, the voltage, the frequency, the heating temperature, and the like may be appropriately set according to the material of the gear.

Here, in order to study the shape of the heating coil and the heating condition in adopting the induction tempering method as a method for reducing the surface hardness of only the tooth tip part of the carburized and quenched gear to 400 to 500 HV, simulation was performed to analyze the state of change in the hardness of the tooth in the case where the workpiece (gear 100) was not rotated in the shape of the heating coil in which eddy current was generated along the tooth width direction and the eddy current was locally concentrated on the tooth tip edge part due to the skin effect and in the case where the workpiece was rotated as illustrated in Figs. 9 and 10 described above.

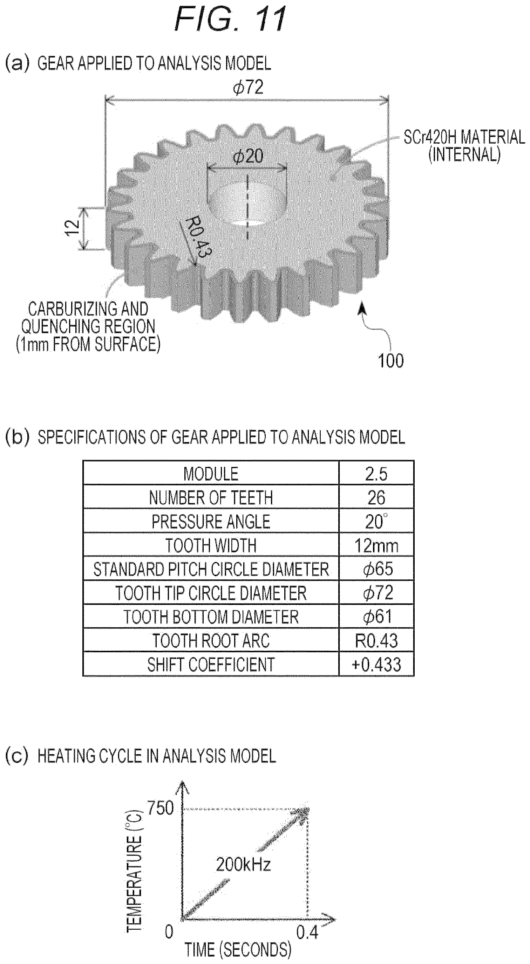

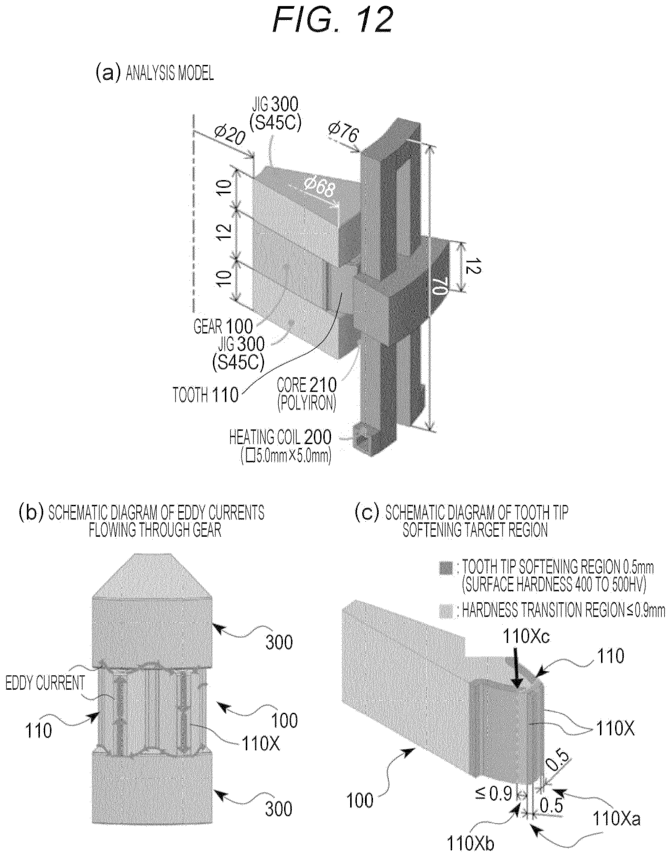

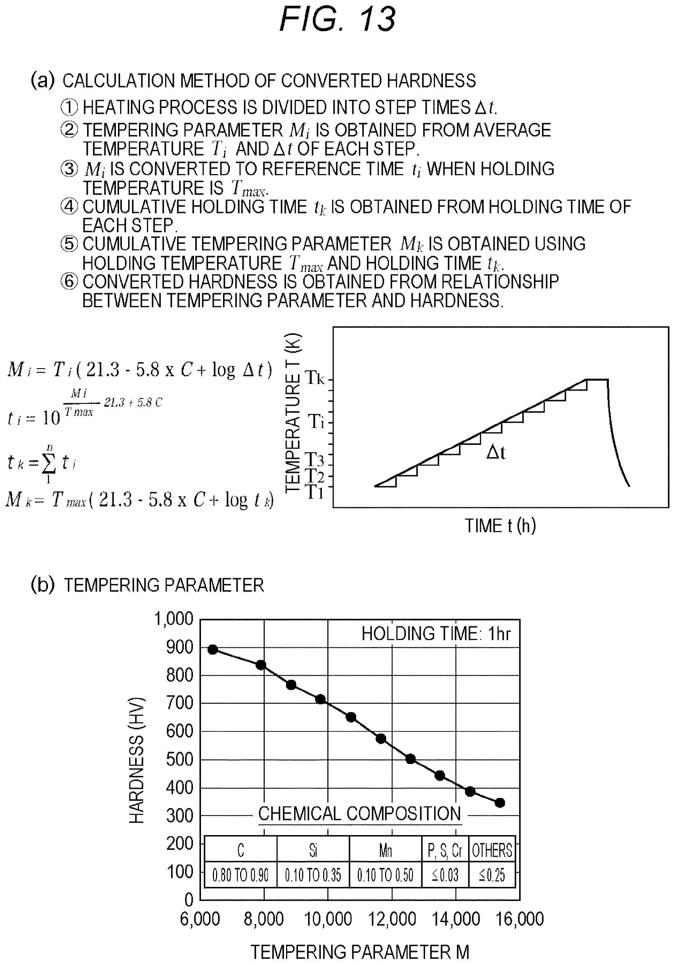

The analysis model was applied to a two-tooth model of a gear 100 as illustrated in Fig. 11(a) as a workpiece. Specific specifications of the gear 100 are as illustrated in Fig. 11(b), and heating conditions are as illustrated in Fig. 11(c). As illustrated in Fig. 12(a), the analysis model is a two-tooth three-dimensional model of a gear 100 and a heating coil 200 (provided with a core 210 made of a polyiron), and jigs 300 (material S45C) for suppressing the spread of magnetic flux to the tooth bottom are disposed on upper and lower portions of the gear 100. Fig. 12(b) illustrates a schematic diagram of eddy currents (indicated by relatively thick arrows) flowing through the gear 100. In this analysis model, as illustrated in Fig. 12(c), a region (tooth tip softening target region) targeted for softening of the tooth tip part in each tooth 110 of the gear 100 is set as a tooth tip softening region 110Xa in a region having a width of 0.5 mm including a tooth tip edge part 110X, a region within 0.9 mm from the tooth tip softening region 110Xa along the tooth flank is set as a hardness transition region 110Xb, and a boundary line on a side of the middle point of the tooth height is set as a tooth tip softening boundary 110Xc. From the temperature history obtained from the analysis result of the local heating simulation at frequencies of 200 kHz, 0.4 seconds, and 750°C with respect to the tooth tip part of the tooth 100, the converted hardness was calculated using the tempering parameter illustrated in Fig. 13(b) by the calculation method illustrated in Fig. 13(a). Note that in this simulation, the tempering parameter related to SCr420H which is the carburized and quenched material of the gear 100 was not available, and thus the tempering parameter of the SK5 material was substituted for the tempering parameter used for the analysis. However, it is considered that there is no problem for the purpose of observing the tendency of the converted hardness.

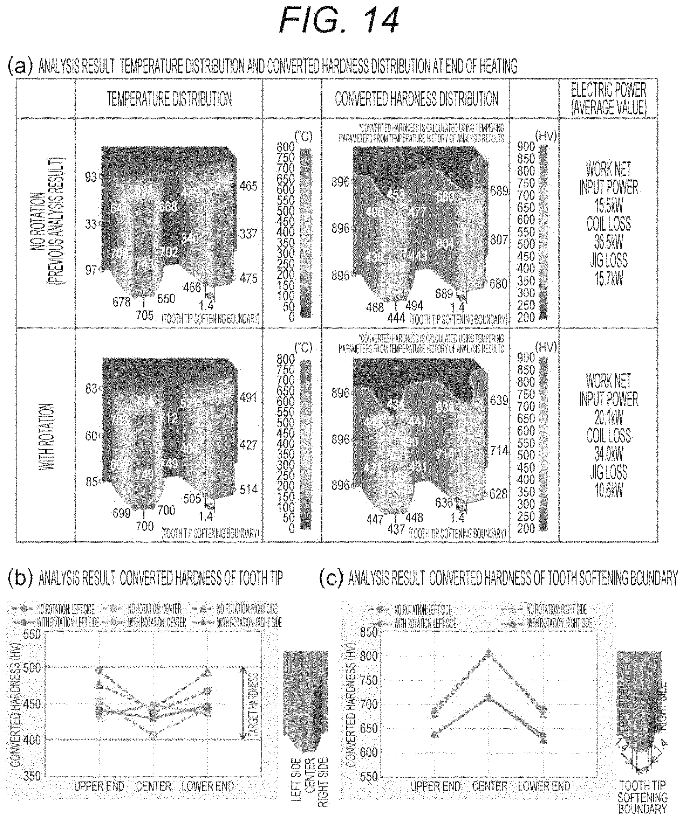

Fig. 14(a) illustrates the temperature distribution and the converted hardness distribution as the analysis results at the end of heating in the case where the gear 100 is not rotated at the time of local heating (no rotation) and the case where the gear 100 is rotated (with rotation) in the above simulation. Furthermore, an analysis value of the converted hardness of the tooth tip is illustrated in Fig. 14(b), and an analysis value of the converted hardness of the tooth tip softening boundary is illustrated in Fig. 14(c). From these analysis results, when the gear 100 is rotated and heated in a heating coil shape that generates an eddy current along the tooth width direction, the temperature tends to increase in a range of 21 to 90°C at the upper and lower end corners of the tooth tip as compared with the case where the gear is not rotated. Furthermore, when the gear 100 was rotated and heated, the converted hardness of the tooth tip calculated from the temperature history of the analysis result was 431 to 490 HV, which satisfied 400 to 500 HV as the target hardness of the tooth tip surface. However, the converted hardness of the tooth tip softening boundary 110Xc is 681 to 714 HV, and tends to decrease by 42 to 93 HV as compared with the case where the gear 100 is not rotated. From the analysis results in the above simulation, it is considered that, in a case where the gear 100 is rotated, the current flows to the tooth flank side when the heating coil passes through the tooth bottom side of the gear 100, and thus the temperature on the tooth flank side easily rises as compared with a case where the gear 100 is not rotated, and the converted hardness tends to decrease.

### Examples

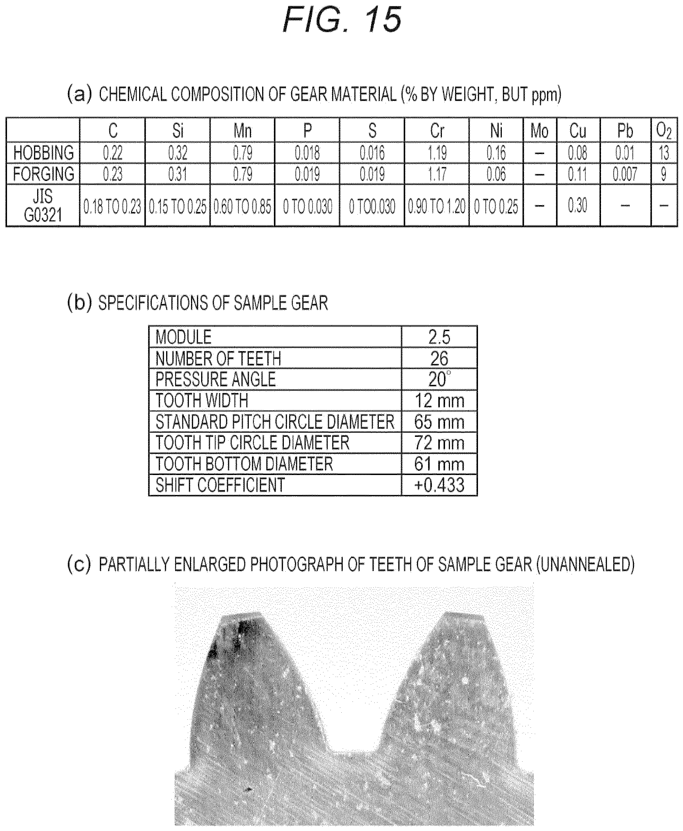

Here, an example of actually testing how the hardness of each of the tooth tip edge part, the tooth flank at the middle point of the tooth height, and the dedendum has changed using the sample gear obtained by the above-described gear manufacturing method will be described. However, when a plurality of gears is used as the sample gear, there is a high possibility that a numerical value of hardness varies. Therefore, a single gear is used as the sample gear, and during the manufacturing process, the hardness distribution of each part is examined by changing the tooth tip edge part softening step S5, that is, the condition of the tempering treatment for each tooth in the present embodiment. The sample gear is made of SCr40H bar steel, and the chemical composition of the gear material is illustrated in Fig. 15(a) in comparison with Japanese Industrial Standard (JIS G0321). The specifications of the sample gear are as illustrated in Fig. 15(b), and the sample gear is a spur gear having 26 teeth.

Heat treatment conditions were as follows: carburization treatment by furnace heating at 900°C for 130 minutes, air cooling at 850°C, followed by cooling to 140°C in oil and quenching, and then tempering treatment at 160°C for 120 minutes to adjust the structure. Fig. 15(c) illustrates a partially enlarged photograph of the sample gear.

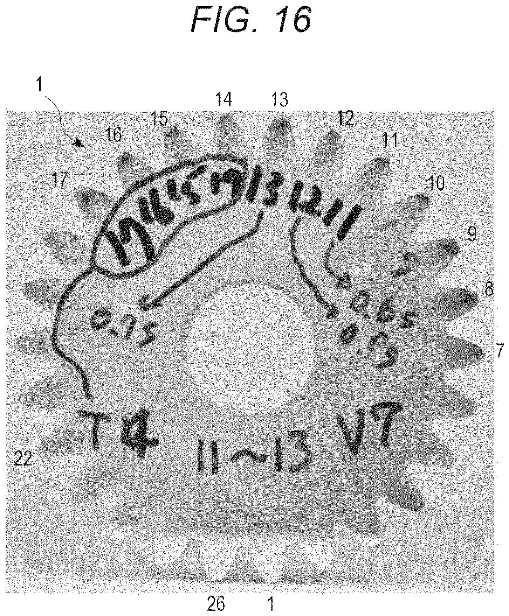

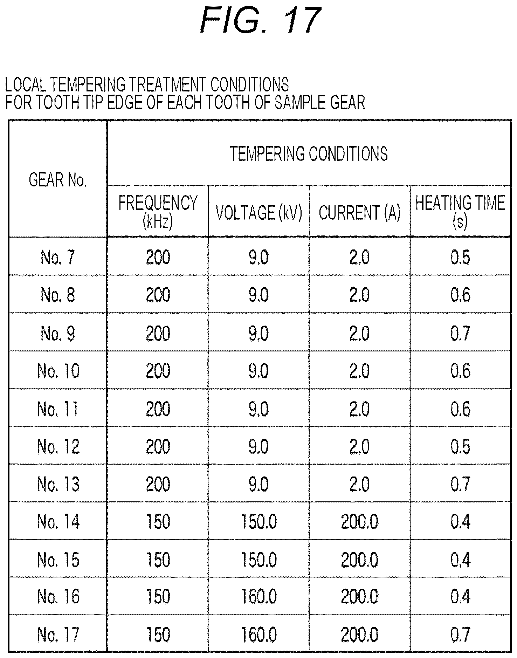

In the present test example, in the sample gear after the tempering treatment, as illustrated in Fig. 16, 26 teeth are denoted by the numbers 1 to 26, and each tooth of the teeth No. 7 to No. 17 is subjected to the tooth tip edge part softening step by the tempering treatment under different conditions. The hardness distribution of the tooth subjected to the local tempering treatment was investigated using the tooth No. 22 which is hardly thermally affected by the local tempering treatment as an untreated reference tooth. The actual state of the reference tooth No. 22 is similar to that of the enlarged photograph illustrated in Fig. 15(c). Here, the conditions of the tempering treatment on the sample gear are illustrated in Fig. 17. In the tempering treatment, a high-frequency oscillator having a frequency of 200 kHz and an output of 50 kW was used for the teeth No. 7 to No. 13, and a high-frequency oscillator having a frequency of 150 kHz and an output of 100 kW was used for the teeth No. 14 to No. 17. Each tooth tip edge part was subjected to induction heating under the conditions illustrated in the drawing, and natural air-cooling tempering was performed.

Regarding the hardness distribution, the entire side surface (including the tooth side surface) of the sample gear was polished, and then finished to a mirror surface by precision manual finishing, so that the Vickers hardness and variations thereof could be accurately measured with a low load of 50 grf (gram weight). As illustrated in Fig. 18(a), for the test target and the reference tooth, Vickers hardness measured at a plurality of points from the start point side to the end point side of each path were plotted as follows: a first region R1 (a vicinity of a start point of the first region R1 exactly corresponds to a tooth tip edge part) is a vicinity of a tooth tip edge part which is a range of 1.5 mm from a tooth tip edge toward a tooth root from a tooth tip along a tooth flank, a second region R2 (a vicinity of an end point of the second region R2 exactly corresponds to a tooth flank of the middle point of the tooth height) is a vicinity of the middle point of the tooth height which is a range of 1.5 mm from an end point of the first region R1, and a third region R3 (a vicinity of an end point of the third region R3 exactly corresponds to a dedendum) is a vicinity of a tooth root which is a range of 1.5 mm from an end point of the second region R2. By continuously viewing the first region R1, the second region R2, and the third region R3, the hardness distribution of the tooth flank along the tooth form from the vicinity of the tooth tip edge part to the vicinity of the dedendum can be viewed. Fig. 18(b) illustrates a hardness distribution diagram of the tooth No. 22 which is a reference tooth. In the tooth No. 22 in which the localized tempering treatment for the tooth tip edge part was not performed, although there were some variations, the hardness distribution was about 800 to 1000 HV in the first region, about 900 to 1000 HV in the second region, and about 900 to 1000 HV in the third region. In particular, the hardness of each of the tooth tip edge part in the vicinity of the start point of the first region R1, the tooth flank in the middle point of the tooth height in the vicinity of the end point of the second region R2, and the dedendum in the vicinity of the end point of the third region R3 is approximately 900 HV, and it can be seen that there is almost no difference in hardness in this sample gear having a small module.

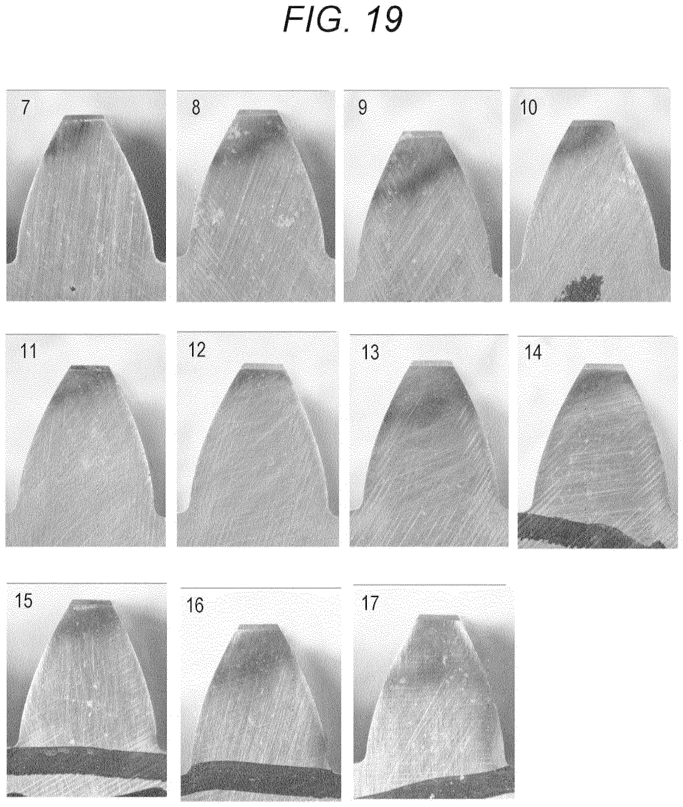

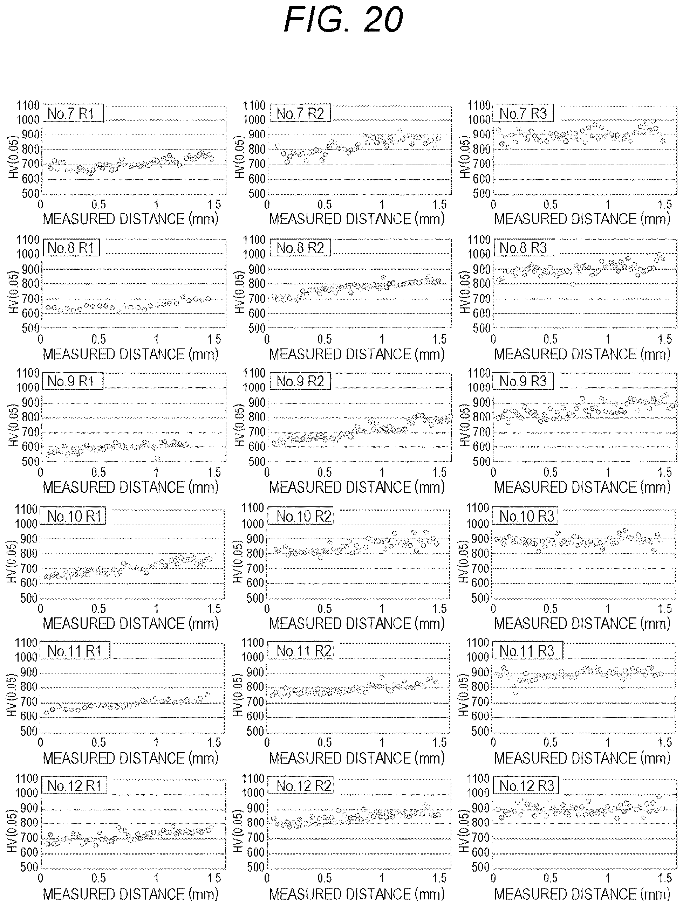

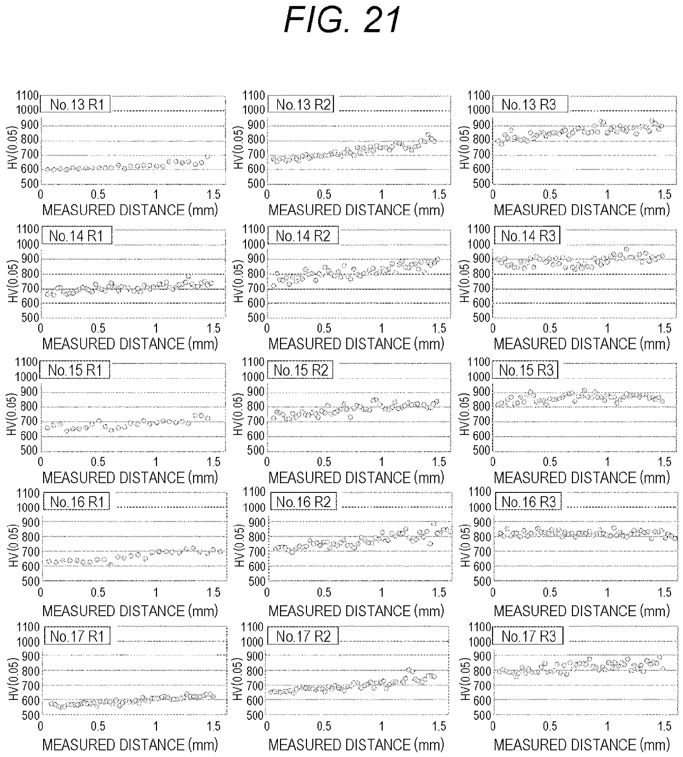

The states of the teeth No. 7 to No. 17 after the tempering treatment as the tooth tip edge part softening step S5 are as illustrated in the enlarged photographs in Fig. 19. A blackish portion from the tooth tip to the middle point of the tooth height of each tooth is a portion where an oxide film adheres to the surface by the tempering treatment of the tooth tip edge part. Most of this region is a softened portion. As a result of the hardness measurement, a hardness distribution diagram of the teeth No. 7 to No. 12 is illustrated in Fig. 20, and a hardness distribution diagram of the teeth No. 13 to No. 17 is illustrated in Fig. 21. In any of the teeth of No. 7 to No. 12, the hardness of the first region R1, the hardness of the second region R2, and the hardness of the third region R3 increase in this order, and the hardness of the first region R1, the hardness of the second region R2, and the hardness of the third region R3 gradually increase from the tooth tip side toward the tooth root side. In particular, it is illustrated that the hardness of the tooth tip edge part in the first region R1 is softened to a range of about 550 HV (tooth No. 17) to about 750 HV (tooth No. 7) due to a difference in tempering treatment conditions. The hardness of the tooth flank at the middle point of the tooth height in the second region R2 is in a range of about 750 HV (teeth Nos. 9 and 17) to about 900 HV (teeth Nos. 7, 10, 12, and 14), and it is illustrated that the softening effect due to the annealing treatment is slightly exerted as compared with the reference tooth No. 22. The hardness of the dedendum in the third region R3 is in a range of about 800 HV (tooth No. 16) to about 950 HV (teeth Nos. 7, 8, and 14), and as compared with the reference tooth of No. 22, it is illustrated that the dedendum is slightly softened when the tooth tip edge part is excessively tempered, and the hardness before the treatment is not maintained, which is not suitable as a gear treatment to be practically used. In Fig. 20, the hardness at the left end of the first region R1 in the left drawing, the hardness near the middle (1.1 mm) of the second region R2 in the center drawing, and the hardness at the right end of the third region R3 in the right drawing are compared to evaluate the effect of the tempering technique on the tooth tip edge part. In the tooth No. 7 in which the tooth tip edge part is considered to have been locally tempered under appropriate conditions, the hardness of the tooth tip edge part has dropped to about HV 700, but the hardness has not dropped at all, HV 900 near the middle of the tooth height and HV 950 near the tooth root. In the tooth No. 9, the hardness of each part is HV 550 at the tooth tip edge part, HV 720 at the middle point of the tooth height, and HV 900 near the tooth root.

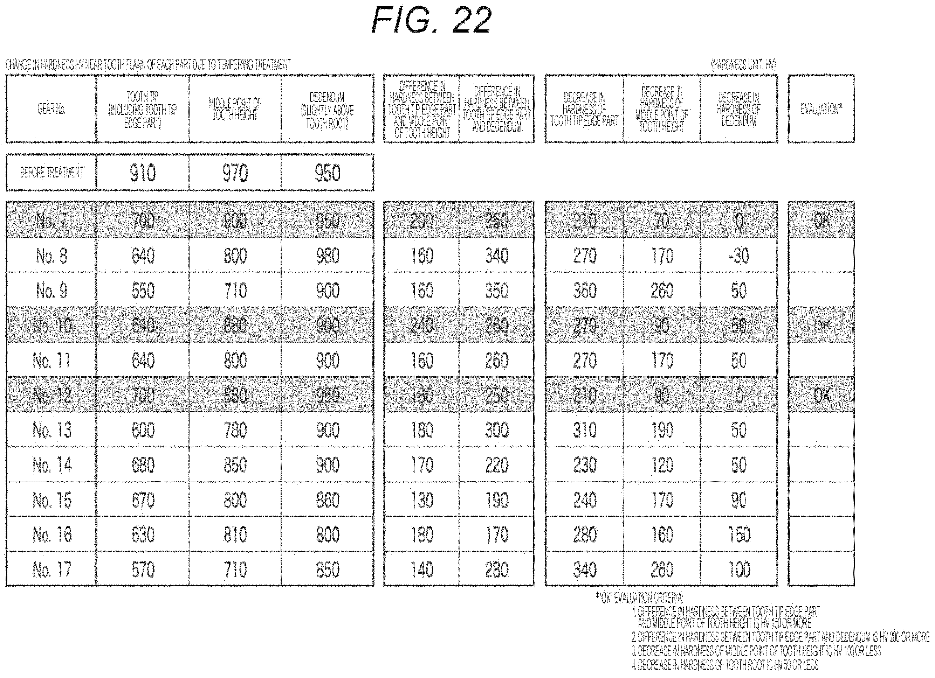

Fig. 22 is a table summarizing the results of Figs. 20 and 21, and summarizing how much the hardness of the tooth tip including the tooth tip edge part, the middle point of the tooth height, and the dedendum (measured at a part slightly above the tooth root) is decreased by the tempering treatment of the tooth tip edge part, and how much the difference in hardness occurs between the tooth tip edge part, the middle point of the tooth height, and the dedendum. In the drawing, a value of hardness indicated by "before treatment" indicates the hardness of each part in the reference tooth No. 22. As described in paragraph 0039, in the technique of the present invention developed here, only the tooth tip edge part needs to be softened without decreasing the hardness of the middle point of the tooth height and the dedendum. With this in mind, and with reference to the experience of conventional gear operation, the evaluation criteria as to whether or not this treatment is effective in preventing a target gear failure may be, for example, (1) a difference in hardness between the tooth tip (including the tooth tip edge part. Hereinafter, the same applies) and the middle point of the tooth height is HV 150 or more, (2) a difference in hardness between the tooth tip and the dedendum is HV 200 or more, (3) a decrease in hardness of the middle point of the tooth height is HV 100 or less, and (4) a decrease in hardness of the dedendum is HV 50 or less. Then, gears subjected to this tempering treatment under the conditions of the teeth No. 7, No. 10, and No. 12 become passed products (In the drawing, evaluation "OK" is illustrated.). Note that threshold values (HV 150 or more, HV 200 or more, HV 100 or less, and HV 50 or less) of the hardness HV exemplified here should be corrected by the experience of operation of the edge processing technology in the industrial world.

In Figs. 20, 21, and 22, the results of local tempering of the tooth tip edge part under appropriate conditions and inappropriate conditions are illustrated in a mixed manner. However, when the state of the oxide film of each of the teeth No. 7, No. 10, and No. 12 which are almost tempered under appropriate conditions (see Fig. 19) is viewed, it is recognized that a region where the color of the oxide film formed at the time of heating in the tempering treatment is dark remains at the tooth tip part, and the temperature has not increased during the treatment from the middle of the tooth height to the tooth root.

Note that the conditions of the tempering treatment in the tooth tip edge part softening step vary depending on various factors such as the design of the induction hardening coil, the installation state of the coil with respect to the target gear, the material and type of the gear, the shape and size of the tooth, and the conditions in the manufacturing process before performing the tempering treatment, and thus, it can be said that the conditions are not uniquely determined, and it is desirable to determine the optimum conditions for each gear. Furthermore, as the tooth tip edge part softening step S5 in the present invention, a similar result can be obtained even if the annealing treatment is adopted instead of the tempering treatment in the above-described embodiment.

When the hardness of the tooth flank is adopted as a criterion for the present treatment and the determination of the gear durability performance, it is necessary to consider the reliability of the hardness measurement value. According to Annex A "Variation in Micro-Vickers Indentation and Hardness" in "Multipoint Observation Method and Evaluation of Micro-Vickers Hardness Distribution of Gear Steel Material" JGMA9901-01:2020 of the Japan Gear Industry Association Standard, there is a reputation that the reliability of the micro-Vickers hardness HV is about HV 30, and the hardness variation of commercially available test pieces for hardness evaluation is also about the same. When HV is quantitatively discussed in the present standard, it is necessary to consider the range of HV reliability.

### Industrial Applicability

The present invention provides a gear that can prevent a failure to a tooth flank at a middle point of a tooth height, a spalling failure due to Trochoidal interference of a dedendum, and breakage of a tooth tip edge part during operation of a gear transmission, and can provide a gear and a method of manufacturing the gear that can dramatically improve ease of manufacturing control, quality control, and safety control of the gear itself. Therefore, the present invention can be extremely useful in a product field to which the gear is applied.

### Description of Reference Signs

- 1, 100: Gear
- 10, 110: Tooth
- 10X, 110X: Tooth tip edge part
- 10Y: Tooth flank at middle point of tooth height
- 10Z: Dedendum
- S5: Tooth tip edge part softening step

## Claims

1. A gear comprising teeth,
wherein a hardness of a tooth tip edge part softened by tempering or annealing in each tooth of the teeth is softer than a hardness of a tooth flank at a middle point of a tooth height of any tooth of the gear.

2. The gear according to claim 1, wherein the hardness of the tooth tip edge part is HV 120 or more softer than the tooth flank at the middle point of the tooth height.

3. The gear according to claim 1 or 2, wherein the hardness of the tooth tip edge part is HV 170 or more softer than a dedendum of any tooth in the gear.

4. The gear according to any one of claims 1 to 3, wherein the tooth tip edge part is softened by tempering or annealing with the tooth tip edge part as a specific target.

5. A method of manufacturing the gear according to any one of claims 1 to 4, the method comprising a tooth tip edge part softening step of tempering or annealing the tooth tip edge part of each tooth with respect to the gear after quenching, wherein by undergoing the tooth tip edge part softening step, a hardness of the tooth tip edge part is softened more than a hardness of the tooth flank at the middle point of the tooth height of any tooth of the gear.

6. The method of manufacturing the gear according to claim 5, wherein the tooth tip edge part softening step includes a step of performing a heat treatment with a tooth tip part of each tooth as a specific target.

7. The method of manufacturing the gear according to claim 6, wherein the tooth tip edge part softening step includes a step of performing an induction tempering method or an induction annealing method with the tooth tip part of each tooth as a specific target.
